# EUROPEAN PATENT APPLICATION

(11) **EP 4 757 373 A1**
(43) Date of publication of application: **10.06.2026**
(21) Application number: 23947009.9
(22) Date of filing: 31.07.2023
(51) Int. Cl.: H04W 12/065

(54) **AUTHENTICATION METHODS AND DEVICES**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN); CAO, Jin, Dongguan, Guangdong 523860 (CN); REN, Xiongpeng, Dongguan, Guangdong 523860 (CN); SHANG, Chao, Dongguan, Guangdong 523860 (CN)
(74) Representative: Novagraaf Technologies
(86) International application number: PCT/CN2023/110259
(87) International publication number: WO 2025/025060

(57) **Abstract**

Provided are authentication methods, a terminal, and a first network device, which relate to the field of communications. The method is performed by a terminal, and includes: transmitting (S610) a first message, wherein the first message carries one or more pieces of authentication information, wherein the one or more pieces of authentication information are used to authenticate a first user using the terminal, and different pieces of authentication information in the one or more pieces of authentication information are related to characteristic information of the first user and characteristic recovery information of different users.

## Description

### TECHNICAL FIELD

The present disclosure relates to the field of communications, and in particular, relates to an authentication method, and a device, a computer-readable storage medium, a computer program product, and a computer program thereof.

### RELATED ART

With the development and popularization of electronic devices, users now have access to various forms of terminals. For the same terminal, different users require different services when accessing the terminal. However, current authentication processing only targets the terminal and cannot distinguish which user is using the terminal. Therefore, how to achieve authentication of the user using the terminal has become an issue that needs to be resolved.

### SUMMARY

Embodiments of the present disclosure provide an authentication method, and a device, a computer-readable storage medium, a computer program product, and a computer program thereof.

Some embodiments of the present disclosure provide an authentication method. The method is performed by a terminal, and includes:
transmitting a first message, wherein the first message carries one or more pieces of authentication information, wherein the one or more pieces of authentication information are used to authenticate a first user using the terminal, and different pieces of authentication information in the one or more pieces of authentication information are related to characteristic information of the first user and characteristic recovery information of different users.

Some embodiments of the present disclosure provide an authentication method. The method is performed by a first network device, and includes:
receiving a first message, wherein the first message carries one or more pieces of authentication information, wherein the one or more pieces of authentication information are used to authenticate a first user using a terminal, and different pieces of authentication information in the one or more pieces of authentication information are related to characteristic information of the first user and characteristic recovery information of different users.

Some embodiments of the present disclosure provide an authentication method. The method is performed by a second network device, and includes:
receiving a first message from a terminal, wherein the first message carries one or more pieces of authentication information, wherein the one or more pieces of authentication information are used to authenticate a first user using the terminal, and different pieces of authentication information in the one or more pieces of authentication information are related to characteristic information of the first user and characteristic recovery information of different users; and
transmitting a fourth message to a first network device, wherein the fourth message carries a verification result, the verification result being related to the one or more pieces of authentication information.

Some embodiments of the present disclosure provide an authentication method. The method is performed by a first network device, and includes:
receiving a fourth message from a second network device, wherein the fourth message carries a verification result, wherein the verification result is related to one or more pieces of authentication information, the one or more pieces of authentication information are used to authenticate a first user using a terminal, and different pieces of authentication information in the one or more pieces of authentication information are related to characteristic information of the first user and characteristic recovery information of different users.

Some embodiments of the present disclosure provide a terminal. The terminal includes:
a first communicating unit, configured to transmit a first message, wherein the first message carries one or more pieces of authentication information, the one or more pieces of authentication information are used to authenticate a first user using the terminal, and different pieces of authentication information in the one or more pieces of authentication information are related to characteristic information of the first user and characteristic recovery information of different users.

Some embodiments of the present disclosure provide a first network device. The first network device includes:
a second communicating unit, configured to receive a first message, wherein the first message carries one or more pieces of authentication information, the one or more pieces of authentication information are used to authenticate a first user using a terminal, and different pieces of authentication information in the one or more pieces of authentication information are related to characteristic information of the first user and characteristic recovery information of different users.

Some embodiments of the present disclosure provide a second network device. The second network device includes:
a third communicating unit configured to receive a first message transmitted by a terminal, wherein the first message carries one or more pieces of authentication information, the one or more pieces of authentication information are used to authenticate a first user using the terminal, and different pieces of authentication information in the one or more pieces of authentication information are related to characteristic information of the first user and characteristic recovery information of different users; and transmit a fourth message to a first network device, wherein the fourth message carries a verification result, and the verification result is related to the one or more pieces of authentication information.

Some embodiments of the present disclosure provide a first network device. The first network device includes:
a second communicating unit, configured to receive a fourth message transmitted by a second network device, wherein the fourth message carries a verification result, the verification result is related to one or more pieces of authentication information, the one or more pieces of authentication information are used to authenticate a first user using a terminal, and different pieces of authentication information in the one or more pieces of authentication information are related to characteristic information of the first user and characteristic recovery information of different users.

Some embodiments of the present disclosure provide a terminal. The terminal includes: a processor, and a memory, wherein the memory is configured to store one or more computer programs, the transceiver is configured to communicate with other devices, and the processor is configured to call and run the one or more computer programs stored in the memory to cause the terminal to perform the method described above.

Some embodiments of the present disclosure provide a first network device. The first network device includes: a transceiver, a processor, and a memory, wherein the memory is configured to store one or more computer programs, the transceiver is configured to communicate with other devices, and the processor is configured to call and run the one or more computer programs stored in the memory to cause the first network device to perform the method described above.

Some embodiments of the present disclosure provide a first network device. The first network device includes: a transceiver, a processor, and a memory, wherein the memory is configured to store one or more computer programs, the transceiver is configured to communicate with other devices, and the processor is configured to call and run the one or more computer programs stored in the memory to cause the second network device to perform the method described above.

Some embodiments of the present disclosure provide a chip. The chip is configured to perform the method described above.

Specifically, the chip includes: a processor configured to call and run one or more computer programs from a memory, to cause a device equipped with the chip to perform the method described above.

Some embodiments of the present disclosure provide a computer-readable storage medium. The computer-readable storage medium is configured to store one or more computer programs, wherein the one or more computer programs, when called and run by a device, cause the device to perform the method described above.

Some embodiments of the present disclosure provide a computer program product. The computer program product includes: one or more computer program instructions, wherein the one or more computer program instructions, when executed by a computer, cause the computer to perform the method described above.

Some embodiments of the present disclosure provide a computer program. The computer program, when run on a computer, causes the computer to perform the method described above.

In the technical solutions according to the embodiments, the terminal transmits the first message, enabling the network to authenticate the first user using the terminal based on pieces of authentication information carried in the first message, where the pieces of authentication information are generated based on the characteristic recovery information of each user and the characteristic information of the current first user. In this way, in the case that different users log in on the same terminal, the network can distinguish and authenticate different users, thereby ensuring security of each user.

### BRIEF DESCRIPTION OF DRAWINGS

FIG. 1 is a schematic diagram of an application scenario according to some embodiments of the present disclosure;
FIG. 2 is a schematic diagram of a system architecture in a 5^{th}-generation (5G) network;
FIG. 3 is a schematic flowchart of SG-authentication and key agreement (AKA) authentication in a 5G network;
FIG. 4 is a schematic flowchart of extensible authentication protocol (EPA)-AKA authentication;
FIGS. 5a to 5c are a plurality of schematic scenario diagrams of correspondences between terminals and users in different scenarios;
FIG. 6 is a schematic flowchart of an authentication method according to some embodiments of the present disclosure;
FIG. 7 is a schematic flowchart of an authentication method according to some embodiments of the present disclosure;
FIG. 8 is a schematic flowchart of an authentication method according to some embodiments of the present disclosure;
FIG. 9 is a schematic flowchart of an authentication method according to some embodiments of the present disclosure;
FIG. 10 is a schematic diagram of a scenario of calculating biometric character information (CH) of a user and generating identity information according to some embodiments of the present disclosure;
FIG. 11 is a schematic diagram of a scenario of related principles of an authentication method according to some embodiments of the present disclosure;
FIG. 12 is a schematic flowchart of an authentication method according to some embodiments of the present disclosure;
FIG. 13 is a schematic diagram of a scenario of calculating a plurality of pieces of protection information according to some embodiments of the present disclosure;
FIG. 14 is a schematic diagram of a scenario of performing authentication processing based on protection information* and protection information according to some embodiments of the present disclosure;
FIG. 15 is still another schematic flowchart of an authentication method according to some embodiments of the present disclosure;
FIG. 16 is a schematic diagram of a scenario of performing authentication processing on protection information* acquired through encryption calculation according to some embodiments of the present disclosure;
FIG. 17 is another schematic flowchart of an authentication method according to some embodiments of the present disclosure;
FIG. 18 is a schematic block diagram of a terminal according to some embodiments of the present disclosure;
FIG. 19 is a schematic block diagram of a first network device according to some embodiments of the present disclosure;
FIG. 20 is a schematic block diagram of a second network device according to some embodiments of the present disclosure;
FIG. 21 is a schematic block diagram of a communication device according to some embodiments of the present disclosure;
FIG. 22 is a schematic block diagram of a chip according to some embodiments of the present disclosure; and
FIG. 23 is a schematic block diagram of a communication system according to some embodiments of the present disclosure.

### DETAILED DESCRIPTION

The technical solutions according to the embodiments of the present disclosure are described hereinafter in combination with the accompanying drawings for the embodiments of the present disclosure.

The technical solutions according to the embodiments of the present disclosure are applicable to various communication systems, such as a long-term evolution (LTE) system, an advanced long-term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, an universal mobile telecommunication system (UMTS), a wireless local area network (WLAN), a wireless fidelity (Wi-Fi), a 5th generation (5G) communication system, or other communication systems.

In general, the traditional communication systems support a limited number of connections and is relatively easy to implement. However, with the development of the communication technologies, the mobile communication systems not only support traditional communications, but also support, for example, device-to-device (D2D) communications, machine-to-machine (M2M) communications, machine-type communications (MTC), vehicle-to-vehicle (V2V) communications, vehicle-to-everything (V2X) communications, and the like. The embodiments of the present disclosure are also applicable to such communication systems. In some embodiments, the communication systems according to the embodiments of the present disclosure are also applicable to a carrier aggregation (CA) scenario, a dual connectivity (DC) scenario, or a standalone (SA) scenario networking scenario. In some embodiments, the communication systems according to the embodiments of the present disclosure are also applicable to an unlicensed spectrum. The unlicensed spectrum may also be considered as a shared spectrum. Alternatively, the communication systems according to the embodiments of the present disclosure are also applicable to a licensed spectrum. The licensed spectrum may also be considered as a non-shared spectrum.

Various embodiments are described in conjunction with a network device and a terminal device in the embodiments of the present disclosure. The terminal device is also referred to as a UE, an access terminal, a subscriber unit, a subscriber station, a rover station, a mobile station, a remote station, a remote terminal, a mobile device, a user terminal, a terminal, a wireless communication device, a user agent, a user apparatus, or the like. The terminal device may be a station (ST) in the WLAN, for example, a cellular phone, a cordless phone, a Session Initiation Protocol (SIP) phone, a wireless local loop (WLL) ST, a personal digital assistant (PDA) device, a hand-held device with a wireless communication capability, a computing device or other processing devices connected to a wireless modem, an in-vehicle device, a wearable device, a terminal device in a next generation communication system (such as the NR network), a terminal device in an evolved public land mobile network (PLMN), or the like. In the embodiments of the present disclosure, the terminal device is deployed on land (for example, indoors or outdoors, or handheld, wearable, or in-vehicle deployment); or the terminal device may be deployed on water (for example, on a ship); or the terminal device may be deployed in air (for example, on an aircraft, a balloon, or a satellite). In the embodiments of the present disclosure, the terminal device is a mobile phone, a pad, a computer with a radio transceiver function, a virtual reality (VR) terminal device, an augmented reality terminal device, a wireless terminal device in industrial control, a wireless terminal device in self-driving, a wireless terminal device in remote medical, a wireless terminal in smart grid, a wireless terminal in transportation safety, a wireless terminal in smart city, or a wireless terminal device in smart home. By way of example by not limitation, in the embodiments of the present disclosure, the terminal device may be a wearable device. The wearable device may also be referred to as a wearable smart device, which is a generic name for wearable devices such as glasses, gloves, watches, clothes, and shoes that are developed by applying wearable technologies for smart designs of daily wearables. The wearable device is a portable device that is directly worn on a body or integrated into clothing or an accessory of a user. The wearable device is not only a hardware device, but also implements powerful functions by software support, data exchange, and cloud interaction. In a broad sense, the wearable smart device includes a full-functionality and large-size device capable of implementing all or part of functions without relying on a smart phone, for example, a smart watch or smart glasses; and includes a device specializing in specific application functions and needs to be used with another device such as a smart phone, for example, various smart bracelets or smart jewelry for vital sign monitoring.

In the embodiments of the present disclosure, the network device is a device for communicating with the mobile device, and the network device is an access point (AP) in WLAN, a base transceiver station (BTS) in GSM or CDMA, a NodeB (NB) in WCDMA, an evolved NodeB (eNB or eNodeB) in LTE, a relay station or an AP, an in-vehicle device, a wearable device, or a network device in an NR network (gNB), in cellular Internet of things, in cellular passive Internet of things, in a future evolutional PLMN network, or in an NTN network. By way of example by not limitation, the network device has mobility in the embodiments of the present disclosure. For example, the network device is a mobile device. In some embodiments, the network device is a satellite or a balloon station. For example, the satellite is a low Earth orbit (LEO) satellite, a medium Earth orbit (MEO) satellite, a geostationary Earth orbit (GEO) satellite, a high elliptical orbit (HEO) satellite, or the like. In some embodiments, the network device is also an NB located on land, water, or the like. In the embodiments of the present disclosure, the network device provides services for cells, and the terminal device communicates with the network device over the transmission resources (such as frequency-domain resources, or spectrum resources) used in the cells. The cell corresponds to the network device (such as the NB), and the cell belongs to a macro NB or an NB corresponding to a small cell. The small cell includes a metro cell, a micro cell, a pico cell, a femto cell, or the like. The small cells have small coverage and low transmit power, and are suitable for providing high-speed data transmission services.

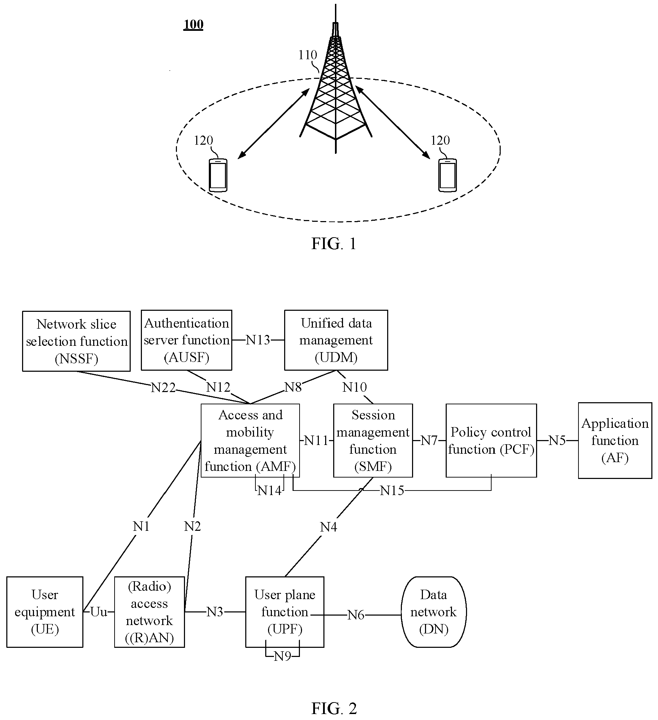

FIG. 1 illustrates a communication system 100. The communication system includes one network device 110 and two terminal devices 120. In some embodiments, the communication system 100 may include a plurality of network devices 110, and another quantity of terminal devices 120 may be deployed within the coverage each of the network devices 110, which is not limited in the embodiments of the present disclosure. In some embodiments, the communication system 100 may further include another network entity such as a mobile management entity (MME), an access and mobility management function (AMF), or the like, which is not limited in the embodiments of the present disclosure. The network device may further include an access network device and a core network device. That is, the wireless communication system further includes a plurality of core networks in communication with the access network device. The access network device is an eNB or eNodeB, a macro station, a micro station (also referred to as a "small station"), a pico station, an AP, a transmission points (TP), or a new generation base stations (gNodeB), and the like in an LTE system, an NR system, or an authorized auxiliary access long-term evolution (LAA-LTE) system. It should be understood that in the embodiments of the present disclosure, devices with the communication function in the network/system are also referred to as the communication device. Using the communication system illustrated in FIG. 1 as an example, the communication device includes a network device and a terminal device with the communication function, the network device and the terminal device may be specific devices in the embodiments of the present disclosure, which are not described herein any further; and the communication device may further include other devices in the communication system, for example, a network controller, a mobile management entity, and other network entities, which is not described in the embodiments of the present disclosure any further.

To facilitate understanding of the embodiments of the present disclosure, the basic processes and concepts involved in the embodiments of the present disclosure are briefly described below. It is understandable that the basic processes and concepts introduced below do not constitute any limitations to the embodiments of the present disclosure.

A system architecture of a 5G network is illustrated in FIG. 2. The system architecture involves: a network slice selection function (NSSF), an authentication server function (AUSF), a unified data management (UDM), an AMF, a session management function (SMF), a policy control function (PCF), an AF, a user plane function (UPF), and a data network (DN). The NSSF is mainly responsible for management of network slicing related information, e.g., responsible for selecting a network slice for a terminal device. The AUSF is responsible for implementing an identity authentication function of user access. The UDM is responsible for managing and storing subscription data and authentication data. The AMF responsible for mobility management, security anchor point and UE policy management or the like; and in addition to performing the mobility management on a UE, the AFM is also responsible for forwarding session management related information between the UE and the SMF. The SMF is responsible for session management, UE IP address allocation and management, or the like. The PCF is responsible for developing policies related to the mobility management, session management, charging, and the like for the UE. The AF is applicable to an external application server. The UPF is responsible for complex user plane processing, e.g., forwarding traffic or reporting traffic usage between a radio access network (RAN) and the Internet, implementing policy of quality of service (QoS) or the like. The DN is a 5G core network (5GC) external data network (e.g., the Internet). Data is transmitted over corresponding interfaces between various nodes of the 5GC, between the UE and the nodes of the 5GC, between the UE and the RAN, and between the RAN and the nodes of the 5GC. For example, as illustrated in FIG. 2, in the 5GC, data is transmitted between the AMF and the NSSF over an N22 interface; data is transmitted between the AMF and the SMF over an N11 interface, data is transmitted between the AMF and the AUSF over an N12 interface, and data is transmitted between the AMF and the UDM over an N8 interface. Data is transmitted between the SMF and the UPF over an N4 interface; data is transmitted between the UPF and an external data network over an N6 interface and between the UPF and the AN over an N3 interface. The UE establishes an access stratum (AS) connection to the AN over a Uu interface to implement interaction of access stratum messages and wireless data transmission. The UE establishes a non-access stratum (NAS) connection to the AMF over an N1 interface to implement interaction of NAS messages. Data is transmitted between the RAN and the AMF over an N2 interface, and data is transmitted between the RAN and the UPF over an N3 interface. It is understandable that only part of the interfaces between the nodes are described, and other interfaces between the nodes in the 5GC in FIG. 2 are not described in detail.

Terminal identifiers used in current systems include at least one of: a subscription permanent identifier (SUPI), a subscription concealed identifier (SUCI), or a permanent equipment identifier (PEI). The globally unique 5G SUPI should be assigned to each user in the 5G system and provided in the UDM/unified data repository (UDR). The SUPI is only used within 3^{rd}-generation partnership project (3GPP) systems. The SUPI includes at least one of an international mobile subscriber identity (IMSI) defined in TS 23.003[19] or a network-specific identifier used for private networks defined in TS 22.261[2]. The SUCI is a privacy-protection identifier that contains a concealed SUPI. Within the scope of this version, the only supported format for the PEI parameter is an international mobile equipment identity (IMEI).

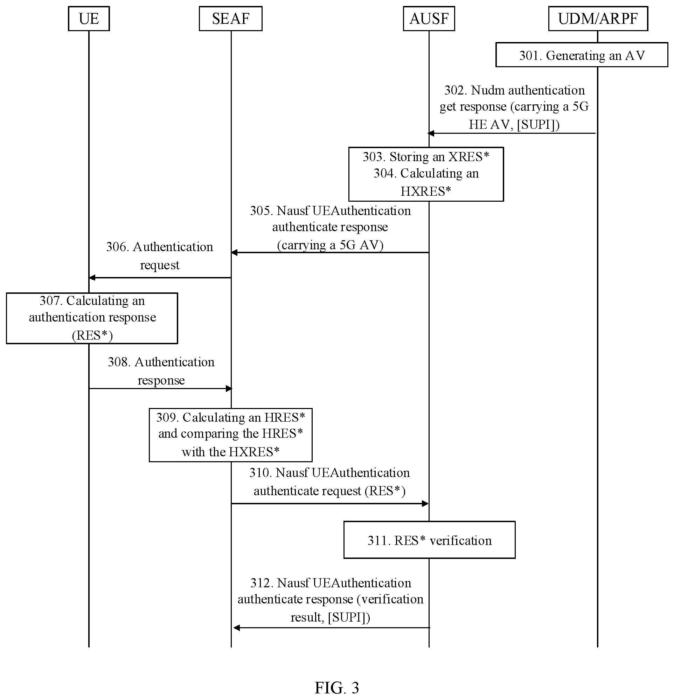

A current authentication mechanism is bidirectional authentication. To be specific, a network needs to authenticate whether an SUPI reported alone is legitimate, and a terminal authenticates whether the network is legitimate (to avoid a false base station or the like). During this process, the network may determine what the SUPI (or an IMSI) of the terminal is, and the SUPI is an important identifier stored in a subscriber identity module (SIM) card. A 5G-AKA authentication procedure in a 5G network is illustrated in FIG. 3, and the procedure includes the following processes. In S301, a UDM/authentication credential repository and processing function (ARPF) generates an authentication vector (AV), wherein the AV may be a 5G home environment authentication vector (which may be denoted as, for example, a 5G HE AV). In S302, the UDM/ARPF transmits to an AUSF an Nudm authentication get response (carrying the 5G HE AV, [SUPI]), wherein [] indicates an optional parameter. In S303, the AUSF stores an expected response (XRES*) in the 5G HE AV. In S304, the AUSF calculates a hashed expected response (HXRES*). In S305, the AUSF transmits to a security anchor function (SEAF) an Nausf UEAuthentication authenticate response (carrying a 5G AV). In S306, the SEAF transmits to a UE an authentication request. In S307, the UE calculates an authentication response (RES*). In S308, the UE transmits to the SEAF the authentication response, and the authentication response may carry the RES*. In S309, the SEAF calculates a hashed response (HRES*) and compares the HRES* with the HXRES*, and performs S310 in the case where the HRES* is consistent with the HXRES*. In S310, the SERF transmits to the AUSF an Nausf UEAuthentication authenticate request, and the Nausf UEAuthentication authenticate request carries the RES*. In S311, the AUSF verifies the RES*. In S312, the AUSF transmits to the SEAF an Nausf UEAuthentication authenticate response, and the Nausf UEAuthentication authenticate response may carry a verification result (i.e., a verification result for the RES*). In some embodiments, the Nausf UEAuthentication authenticate response further carries the SUPI.

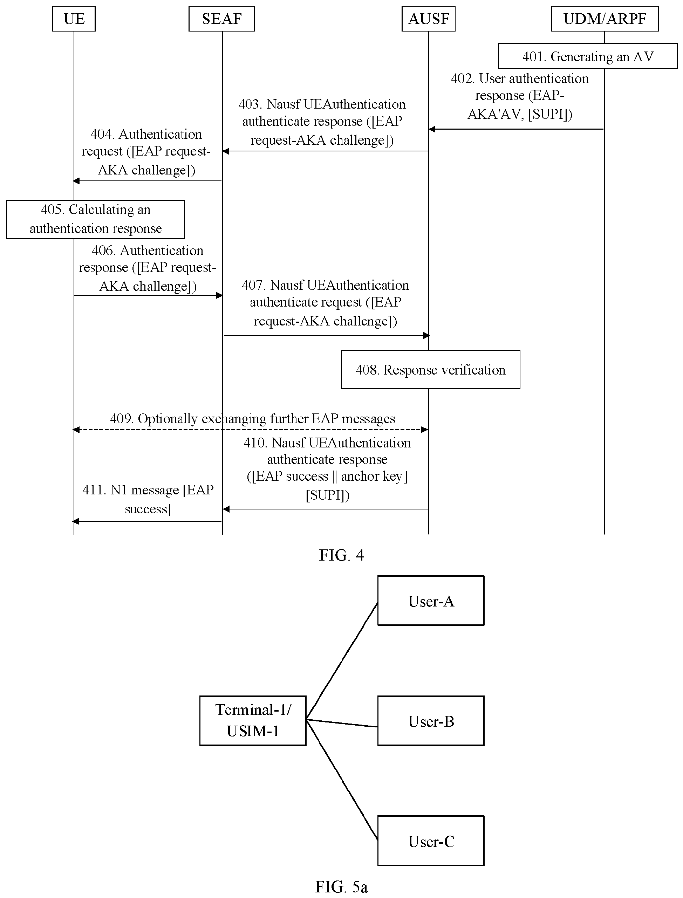

An EPA-AKA authentication procedure is illustrated in FIG. 4, and the procedure may include the following processes. In S401, a UDM/ARPF generates an AV. In S402, the UDM/ARPF transmits to an AUSF an Nudm _UEAuthentication _Get response (carrying an extensible authentication protocol-authentication and key agreement authentication vector (EAP-AKA'AV), [SUPI]), wherein [] indicates an optional parameter. In S403, the AUSF transmits to an SEAF an Nausf UEAuthentication authenticate response. In some embodiments, the Nausf UEAuthentication authenticate response carries an EAP request/AKA'-challenge. In S404, the SEAF transmits to a UE an authentication request. In some embodiments, the authentication request carries the EAP request-AKA challenge. In S405, the UE calculates an authentication response. In S406, the UE transmits to the SEAF the authentication response (Auth-Resp.). In some embodiments, the authentication response carries the EAP request-AKA challenge. In S407, the SERF transmits to the AUSF an Nausf UEAuthentication authenticate request. In some embodiments, the Nausf UEAuthentication authenticate request carries the EAP request-AKA challenge. In S408, the AUSF verifies the response. In some embodiments, S409 is performed, wherein the AUSF exchanges further EAP messages with the UE. In S410, the AUSF transmits to the SEAF an Nausf UEAuthentication authenticate response. In some embodiments, the Nausf UEAuthentication authenticate response carries an EAP success || anchor key [SUPI]. In S411, the SEAF transmits to the UE an N1 message. In some embodiments, the N1 message carries an indication of the EAP success.

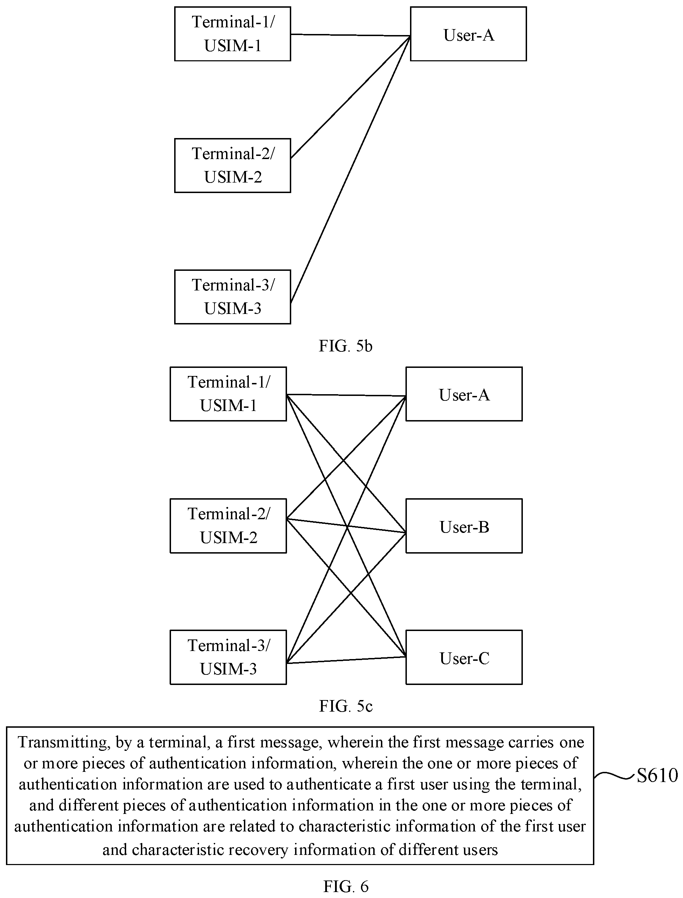

With the development and popularization of electronic devices, consumers now have access to various forms of terminals, and each form of terminals have its own advantages. For example, as illustrated in FIG. 5a, terminal-1 (into which a universal subscriber identity module (USIM)-1 is inserted) is shared by a plurality of users (user-A, user-B, and user-C in FIG. 5a). For example, as illustrated in FIG. 5b, user-A uses a plurality of terminals (for example, terminal-1 (using USIM-1), terminal-2 (using USIM-2), and terminal-3 (using USIM-3) in FIG. 5b). For example, as illustrated in FIG. 5c, a plurality of terminals (for example, terminal-1 (using USIM-1), terminal-2 (using USIM-2), and terminal-3 (using USIM-3) in FIG. 5c) are shared by a plurality of users (user-A, user-B, and user-C in FIG. 5c). For the same terminal, different users require different services when accessing the terminal. However, current SUPI/IMSI-based authentication (or authentication processing) is only performed at a terminal granularity. That is, the current authentication or authentication processing procedure only distinguishes a USIM card used by the terminal and cannot distinguish which user is using the terminal. Therefore, new algorithms, parameters, and procedures need to be introduced to enable authentication performed by a network on a CH of a user. In addition, new user identifiers (IDs) need to be further introduced to identify different users using the same terminal.

It should be understood that the terms "system" and "network" herein are interchangeably used herein. The term "and/or" herein merely is used to indicate an association describing associated objects, that is, three types of relationships. For example, the phrase "A and/or B" is used to indicate (A), (B), or (A and B). In addition, the character "/" generally is used to indicate an "or" relationship between the associated objects. The term "indicate" in the embodiments of the present disclosure means the direct indication, indirect indication, or an association. For example, A indicating B means that A directly is used to indicate B, for example, B is acquired by A; A indirectly is used to indicate B, for example, A is used to indicate C and B is acquired by C; A and B are associated. The term "corresponding" means that there is a direct correspondence or indirect correspondence between two objects, an association between two objects, a relationship of indicating or being indicated, or a relationship of configuring and being configured.

For better understanding of the technical solutions according to the embodiments of the present disclosure, the related technologies in the present disclosure are described hereinafter. The following related technologies may be combined with the technical solutions according to the embodiments of the present disclosure arbitrarily, which fall within the scope of protection of the embodiments of the present disclosure.

FIG. 6 is a schematic flowchart of an authentication method according to some embodiments of the present disclosure. The method includes at least some of the following content.

In S610, a terminal transmits a first message, wherein the first message carries one or more pieces of authentication information, wherein the one or more pieces of authentication information are used to authenticate a first user using the terminal, and different pieces of authentication information in the one or more pieces of authentication information are related to characteristic information of the first user and characteristic recovery information of different users.

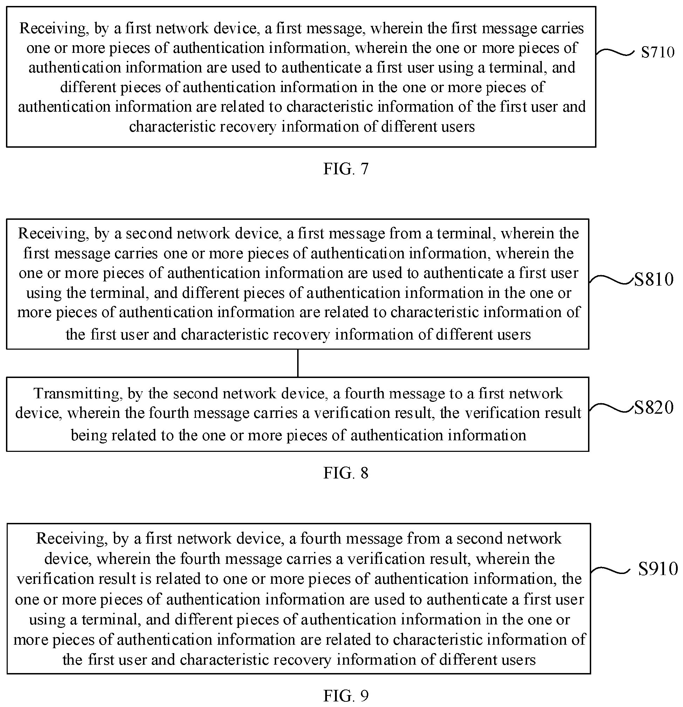

FIG. 7 is a schematic flowchart of an authentication method according to some embodiments of the present disclosure. The method includes at least some of the following content.

In S710, a first network device receives a first message, wherein the first message carries one or more pieces of authentication information, wherein the one or more pieces of authentication information are used to authenticate a first user using a terminal, and different pieces of authentication information in the one or more pieces of authentication information are related to characteristic information of the first user and characteristic recovery information of different users.

FIG. 8 is a schematic flowchart of an authentication method according to some embodiments of the present disclosure. The method includes at least some of the following content.

In S810, a second network device receives a first message from a terminal, wherein the first message carries one or more pieces of authentication information, wherein the one or more pieces of authentication information are used to authenticate a first user using the terminal, and different pieces of authentication information in the one or more pieces of authentication information are related to characteristic information of the first user and characteristic recovery information of different users.

In S820, the second network device transmits a fourth message to a first network device, wherein the fourth message carries a verification result, and the verification result is related to the one or more pieces of authentication information.

FIG. 9 is a schematic flowchart of an authentication method according to some embodiments of the present disclosure. The method includes at least some of the following content.

In S910, a first network device receives a fourth message from a second network device, wherein the fourth message carries a verification result, wherein the verification result is related to one or more pieces of authentication information, the one or more pieces of authentication information are used to authenticate a first user using a terminal, and different pieces of authentication information in the one or more pieces of authentication information are related to characteristic information of the first user and characteristic recovery information of different users.

The first network device may be a first access network device or a first core network device. In some embodiments, the first network device is the first core network device. In the embodiments, the first network device includes at least one of a UDM or a UDR. It should be understood that the foregoing description is merely illustrative. In actual processing, the first network device is not limited to the core network elements as listed above, and no exhaustive enumeration of all possible network elements for the first network device is provided herein.

The second network device may be a second access network device or a second core network device. In some embodiments, the second network device is the second core network device. In the embodiments, the second network device includes at least one of a verification network element, an AMF, an AUSF, a home subscriber server (HSS), or an ARPF. The verification network element may be a newly added core network element. For example, the verification network element is a network element used at least for user authentication.

The terminal may be a 3GPP terminal, that is, a terminal capable of accessing a 3GPP network to transmit and receive data. Exemplarily, the terminal may be a mobile phone, a watch, a tablet, a television, augmented reality /virtual reality (VR) glasses, or the like. Alternatively, the terminal may be a non-3GPP terminal. The embodiments do not exhaust or limit all possible types of terminals.

In some embodiments, in the terminal, the characteristic recovery information of each of the one or more users is pre-configured; in the first network device, the characteristic key of each of the one or more users is stored in association with the identifier of the each of the one or more users and the characteristic recovery information of the each of the one or more users. Each of the one or more users is a user capable of using the terminal, and the one or more users include the first user.

That is, the terminal pre-configures the characteristic recovery information of each of the one or more users, and the first network device pre-configures identity information of each of the one or more users. The identity information of each of the one or more users may include an identifier of the user, characteristic recovery information of the user, and a characteristic key of the user.

Taking any user in the one or more users as an example, the user uses a local device (which may be, for example, a terminal) to input characteristic information of the user into a related device. The related device processes the characteristic information of the user using an extraction algorithm to acquire a characteristic key and characteristic recovery information corresponding to the user output by the related device. The user may store the characteristic recovery information of the user locally (e.g., in a USIM), and transmit an identifier of the user, the characteristic key of the user, and the characteristic recovery information of the user to an authentication server as identity information of the user. Accordingly, the authentication server receives and stores the identity information of the user (i.e., the identifier of the user, the characteristic key of the user, and the characteristic recovery information of the user) in an associated manner.

In some embodiments, the characteristic information of the user refers to CH of the user. For example, the characteristic information of the user includes at least one of a fingerprint, a facial characteristic, a voice characteristic, a voiceprint, a palmprint, or the like.

In some embodiments, the characteristic information of the user includes processed CH of the user. In the embodiments, the characteristic information of the user includes at least one of a processed fingerprint, a processed facial characteristic, a processed voice characteristic, a processed voiceprint characteristic, a processed palmprint characteristic, or the like. The method for processing the CH of the user may adopt any algorithm capable of processing the CH, which is not limited herein.

The related device may be any device with a data processing capability, for example, a server or a computing device, and possible device types of the related device are not limited or exhausted herein.

The extraction algorithm may be provided according to an actual situation. For example, the extraction algorithm may be a generation (Gen) algorithm, a fuzzy extractor algorithm, a fuzzy extractor generation algorithm, or the like, which is not exhausted herein. Input of the extraction algorithm is the characteristic information of the user, and output of the extraction algorithm is the characteristic key of the user and the characteristic recovery information of the user.

The characteristic key of the user may be acquired by recovering based on the characteristic recovery information of the user and the characteristic information of the user. The characteristic key of the user is also referred to as CH secret information of the user or a biometric character key (CHK) of the user.

The characteristic key of the user may be acquired by jointly calculating based on the characteristic recovery information of the user and the characteristic information of the user. The characteristic recovery information of the user may be a recovery value of the user or an assisted recovery value (AR) of the user.

The identifier of the user may be an ID that can uniquely identify the user, such as a user ID. For the method for generating or assigning the identifier of the user, the identifier may be manually generated, pre-configured, or the like, which is not exhausted or limited herein.

The authentication server may be the first network device in the embodiments.

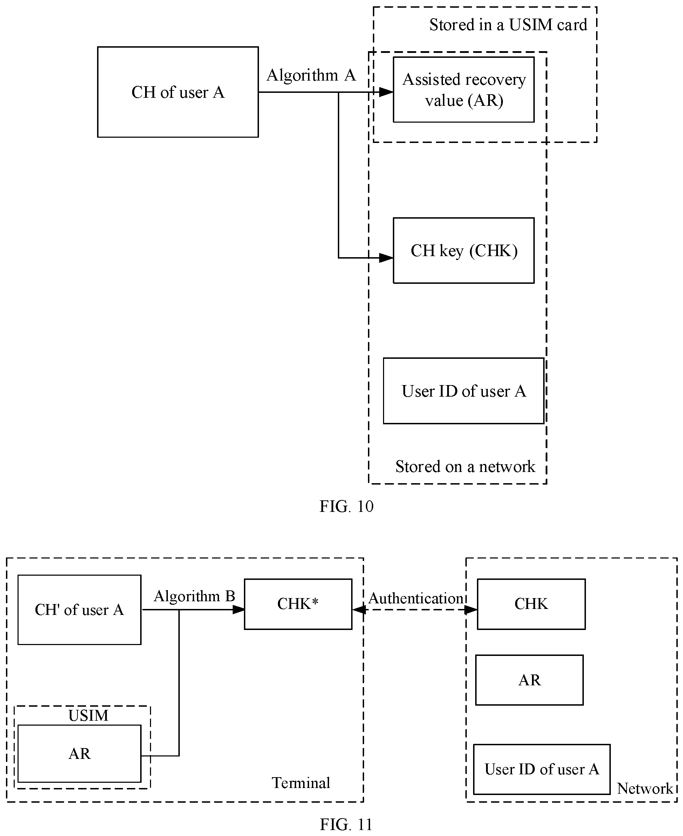

Referring to FIG. 10, the embodiments are illustrated using an example where any user is user A. CH (for example, at least one of a facial characteristic, a fingerprint characteristic, a palmprint characteristic, a voiceprint characteristic, or a voice characteristic) of user A is input via a related device. A fuzzy extractor algorithm A (for example, a fuzzy extractor generation (Gen) algorithm) built in the related device is responsible for processing the CH to generate a CHK and an AR. The AR is stored locally (e.g., in a USIM). The CHK, the AR, and a user ID (used to retrieve the CHK and the AR) of user A are transmitted to a network (for example, an authentication server, which may be the first network device in the embodiments, such as a UDM/UDR) using a secure method. The network stores the user ID of user A, the CHK, and the AR. Through processing illustrated in FIG. 8, identity information (AR\CHK\User ID) of user A may be stored on the network (for example, the first network device, such as a UDM/UDR), the AR in the identity information of user A may be written into a USIM card, and an operator may assign, to the subscribed user A for use, the USIM card written with the AR of user A.

Furthermore, in the case where a plurality of users share one USIM card or a terminal corresponding to the USIM card, the identity information is generated separately for each of the plurality of users. Then, a part or all of the identity information of each user is stored in the USIM and on the network in the same storage manner as the identity information of user A. The CHK of any user may be calculated using the AR and the CH of the user.

In some embodiments, the terminal interacts with the first network device, and the first network device performs the authentication processing on the first user using the terminal.

Before the terminal transmits the first message, the method may further include: receiving, by the terminal, a second message. Accordingly, before the first network device receives the first message, the method further includes: transmitting, by the first network device, the second message.

Transmitting, by the first network device, the second message may refer to: transmitting, by the first network device, the second message to the terminal via one or more other network devices. Receiving, by the terminal, the second message may include: receiving, by the terminal, the second message transmitted by the first network device via one or more other network devices. The second message carries a verification requirement for a user using the terminal.

The one or more other network devices may include other core network devices, access network devices serving the terminal, or the like. One or more other core network devices may be provided. Exemplarily, the other core network devices may include the second network device. Descriptions of the second network device are the same as those in the foregoing embodiments, and are not repeated herein.

Before the terminal receives the second message, the processing performed by the terminal may further include: transmitting, by the terminal, an authentication request to the first network device via one or more other network devices. Accordingly, before the first network device transmits the second message, the method may further include: receiving, by the first network device, the authentication request from the terminal via one or more other network devices. The authentication request may be a request for authenticating the first user using the terminal.

It should be understood that this is merely a possible example for the terminal to trigger the first network device to verify. In some embodiments, the second network device transmits an authentication request to the first network device, wherein the authentication request at least carries an identifier of the terminal. Accordingly, before the first network device transmits the second message, the method may include: receiving, by the first network device, the authentication request from the second network device.

In some embodiments, after receiving the second message, the terminal calculates the one or more pieces of authentication information, wherein the one or more pieces of authentication information are acquired based on the characteristic information of the first user and the characteristic recovery information of the one or more users.

The one or more pieces of authentication information being used to authenticate the first user using the terminal may refer to that the one or more pieces of authentication information are used to authenticate the first user, and the first user is the user using the terminal. The first user being the user using the terminal may refer to that the first user is a user currently using the terminal or a user who currently needs to use the terminal.

Upon acquiring the one or more pieces of authentication information through calculation, the terminal transmits the first message carrying the one or more pieces of authentication information. Accordingly, after the first network device receives the first message, the method may include: authenticating, by the first network device and based on the one or more pieces of authentication information and one or more pieces of verification information, the first user using the terminal, wherein the one or more pieces of verification information are associated with identification information of one or more users capable of using the terminal, different pieces of verification information are associated with identification information of different users, the identification information of each of the one or more users includes at least one of an identifier of the each of the one or more users or a serial number of the each of the one or more users, and the one or more users include the first user. The first user may refer to the user currently using the terminal.

The serial number of each user is also referred to as a code of each user, a number of each user, or the like. The serial number of each user may be generated by the first network device. The serial number of each user corresponds to the identifier of each user. An association relationship or a correspondence between the serial number of each user and the identifier of the user may be further stored in the first network device. The serial number of the user may function to enable uniquely identifying a user by the first network device and other network devices.

In some embodiments, the one or more pieces of authentication information include one or more characteristic authentication keys, and the one or more characteristic authentication keys are acquired based on the characteristic information of the first user and the characteristic recovery information of the one or more users. The one or more pieces of verification information include the characteristic key of each of the one or more users.

The characteristic information of the first user may refer to CH of the first user, or processed CH of the first user. The CH of the first user may be acquired by the terminal using a collection component. The collection component may include at least one of a camera, a touch collection screen, a sensor, or the like. The method for the collection component of the terminal to acquire the CH of the first user is not limited in the embodiments.

Any piece of authentication information in the one or more pieces of authentication information may be a characteristic authentication key. Taking an example where any piece of authentication information is an i^{th} characteristic authentication key (where i is a positive integer), calculating the i^{th} characteristic authentication key by the terminal may include: calculating, by the terminal, the i^{th} characteristic authentication key based on the characteristic information of the first user and characteristic recovery information of an i^{th} user. Exemplarily, the i^{th} characteristic authentication key may be denoted as CHK-i*. The i^{th} user is any user in the one or more users.

Calculating, by the terminal, the i^{th} characteristic authentication key based on the characteristic information of the first user and the characteristic recovery information of the i^{th} user may refer to: acquiring, by the terminal, the i^{th} characteristic authentication key by calculating the characteristic information of the first user and the characteristic recovery information of the i^{th} user using a recovery algorithm. The recovery algorithm corresponds to the extraction algorithm. For example, the extraction algorithm may be the fuzzy extractor generation algorithm, and correspondingly, the recovery algorithm may be a fuzzy extractor recovery (Rep) algorithm. Since each characteristic authentication key is calculated in the same manner as the i^{th} characteristic authentication key, details are not repeated herein.

Any piece of verification information in the one or more pieces of verification information is a characteristic key of any user capable of using the terminal. Taking an example where any user is the i^{th} user, in the first network device, the characteristic key of the i^{th} user is associated with an identifier of the i^{th} user capable of using the terminal. The specific method for the first network device to associate and store the characteristic key of each user and the identifier of each user has been described in detail in the foregoing embodiments, and is not repeated herein. Exemplarily, the characteristic key of the i^{th} user may be denoted as CHK-i.

Authenticating, by the first network device and based on the one or more pieces of authentication information and the one or more pieces of verification information, the first user using the terminal may include: comparing, by the first network device, a j^{th} characteristic authentication key in the one or more characteristic authentication keys with the characteristic key of each user, determining, in the case where the j^{th} characteristic authentication key matches a characteristic key of a k^{th} user, an identifier of the k^{th} user associated with the characteristic key of the k^{th} user as an identifier of the first user, and determining successful authentication of the first user using the terminal. j and k are both positive integers, and the k^{th} user is any user in the one or more users.

The processing performed by the first network device may further include: comparing, by the first network device, a (j+1)^{th} characteristic authentication key in the one or more characteristic authentication keys with the characteristic key of each user in the case where the j^{th} characteristic authentication key does not match the characteristic key of any user, and so on, until determining all the characteristic authentication keys.

In addition, the method may further include: determining, by the first network device, authentication failure of the first user in the case where all the characteristic authentication keys are determined and no characteristic authentication key matches the characteristic key of any user.

It should be noted that the processing performed by the first network device may further include: determining, by the first network device, the j^{th} characteristic authentication key as a characteristic authentication key matching the first user in the case where the j^{th} characteristic authentication key matches the characteristic key of the k^{th} user.

In some embodiments, the one or more pieces of authentication information are acquired based on a first parameter and the one or more characteristic authentication keys, and the one or more characteristic authentication keys are acquired based on the characteristic information of the first user and the characteristic recovery information of the one or more users. Accordingly, the one or more pieces of verification information are acquired based on the first parameter and the characteristic key of each of the one or more users.

In the embodiments, the verification information is also referred to as or alternatively denoted as protection information, and the authentication information is denoted as "protection information*".

Related descriptions of the characteristic information of the first user and the one or more characteristic authentication keys are not repeated herein.

In some embodiments, the first parameter is generated by the first network device. In the case where the first parameter is generated by the first network device, the first parameter is a random number. The method for the first network device to generate the random number is not limited in the embodiments. In this case, the second message further carries the first parameter.

In some embodiments, the first parameter is generated by the terminal or is pre-configured.

In the case where the first parameter is generated by the terminal, the first parameter is a random number. The method for the terminal to generate the random number is not limited in the embodiments. In the case where the first parameter is generated by the terminal, the processing performed by the terminal further includes: transmitting, by the terminal, the first parameter. Accordingly, the processing performed by the first network device may further include: receiving, by the first network device, the first parameter. Specifically, transmitting, by the terminal, the first parameter may refer to: transmitting, by the terminal, the first parameter to the first network device. Receiving, by the first network device, the first parameter may refer to: receiving, by the first network device, the first parameter from the terminal.

The terminal may transmit the first parameter in transmitting the first message, and the first parameter may be carried in the first message. Alternatively, prior to transmitting the first message, the terminal carries the first parameter in any uplink message and transmits the first parameter to the first network device.

In the case where the first parameter is pre-configured, the first parameter may be the same parameter pre-configured in the terminal and the first network device. For example, the first parameter is a related parameter of the terminal, and the related parameter of the terminal is at least one of an identifier of the terminal, a device-related parameter of the terminal, or the like. For example, in the case where the first parameter is the identifier of the terminal, the first parameter is an IMSI in an SIM card of the terminal.

Taking an example where any piece of authentication information is an i^{th} piece of authentication information, the method for the terminal to calculate the i^{th} piece of authentication information may include: calculating, by the terminal, the i^{th} characteristic authentication key based on the characteristic information of the first user and the characteristic recovery information of the i^{th} user, and calculating the i^{th} piece of authentication information based on the first parameter and the i^{th} characteristic authentication key using a first calculation method. The first calculation method may include one of: a first authentication function (for example, an f1 function as defined in 3GPP), a second authentication function (for example, an f2 function as defined in 3GPP), a third key generation function (for example, an f3 function as defined in 3GPP), a fourth key generation function (for example, an f4 function as defined in 3GPP), a fifth key generation function (for example, an f5 function as defined in 3GPP), or a hash algorithm. The hash algorithm may include the hash based message authentication code-secure hash algorithm-256 (HMAC-SHA-256), or other hash algorithms, which are not exhausted in the embodiments.

In the embodiments, an opportunity for the first network device to calculate the one or more pieces of verification information may be located at a time before the first network device transmits the second message to the terminal, or a time after the first network device receives the first message from the terminal.

In some embodiments, in the case where the first parameter is pre-configured in both the terminal and the first network device, or the first parameter is generated by the first network device, the first network device calculates the one or more pieces of verification information prior to transmitting the second message to the terminal, or the first network device calculates the one or more pieces of verification information upon receiving the first message from the terminal.

In some embodiments, in the case where the first parameter is generated by the terminal, and is transmitted to the first network device by the terminal via another uplink message before the first network device transmits the second message, the first network device calculates the one or more pieces of verification information prior to transmitting the second message to the terminal, or calculates the one or more pieces of verification information after the first network device receives the first message from the terminal.

In some embodiments, in the case where the first parameter is generated by the terminal, and the terminal carries the first parameter in the first message and transmits the first parameter to the first network device, the first network device calculates the one or more pieces of verification information upon receiving the first message from the terminal.

Taking an example where any piece of verification information is an i^{th} piece of verification information, the method for the first network device to calculate the i^{th} piece of verification information is: calculating, by the first network device, the i^{th} piece of verification information based on the first parameter and the characteristic key of the i^{th} user using the first calculation method.

In addition, upon acquiring the i^{th} piece of verification information through calculation, the first network device further associates the i^{th} piece of verification information with the identifier of the i^{th} user. Since each piece of verification information is calculated in the same manner as the i^{th} piece of verification information, details are not repeated herein.

Authenticating, by the first network device and based on the one or more pieces of authentication information and the one or more pieces of verification information, the first user using the terminal may include: comparing, by the first network device, a j^{th} piece of authentication information in the one or more pieces of authentication information with each piece of verification information, determining, in the case where the j^{th} piece of authentication information matches a k^{th} piece of verification information, an identifier of the k^{th} user associated with the k^{th} piece of verification information as an identifier of the first user, and determining successful authentication of the first user using the terminal. j and k are both positive integers, and the k^{th} user is any user in the one or more users.

Determining the identifier of the k^{th} user associated with the k^{th} piece of verification information as the identifier of the first user may refer to: determining identification information of the k^{th} user associated with the k^{th} piece of verification information, and determining, in the case where the identification information of the k^{th} user includes the identifier of the k^{th} user, the identifier of the k^{th} user as the identifier of the first user; and/or determining identification information of the k^{th} user associated with the k^{th} piece of verification information, and determining, in the case where the identification information of the k^{th} user includes a serial number of the k^{th} user, the identifier of the k^{th} user corresponding to the serial number of the k^{th} user as the identifier of the first user.

The processing performed by the first network device may further include: comparing, by the first network device, a (j+1)^{th} piece of authentication information in the one or more pieces of authentication information with each piece of verification information in the case where the j^{th} piece of authentication information does not match any piece of verification information, and so on, until determining all pieces of authentication information.

In addition, the method may further include: determining, by the first network device, authentication failure of the first user in the case where the determination for each piece of authentication information is completed and no authentication information matches any piece of verification information.

It should be noted that the processing performed by the first network device may further include at least one of: determining, by the first network device, the j^{th} piece of authentication information as authentication information matching the first user in the case where the j^{th} piece of authentication information matches the k^{th} piece of verification information; or determining, by the first network device, the characteristic key of the i^{th} user associated with the k^{th} piece of verification information as the characteristic authentication key matching the first user in the case where the j^{th} piece of authentication information matches the k^{th} piece of verification information.

In some embodiments, the one or more pieces of authentication information are acquired by encrypting the one or more characteristic authentication keys based on the first parameter. The one or more pieces of verification information include the characteristic key of each of the one or more users.

Taking an example where any piece of authentication information is the i^{th} piece of authentication information, the method for the terminal to calculate the i^{th} piece of authentication information includes: calculating, by the terminal, the i^{th} characteristic authentication key based on the characteristic information of the first user and the characteristic recovery information of the i^{th} user, encrypting the i^{th} characteristic authentication key based on the first parameter to acquire the encrypted i^{th} characteristic authentication key, and determining the encrypted i^{th} characteristic authentication key as the i^{th} piece of authentication information. An encryption algorithm used for the encryption calculation is not limited in the embodiments. Exemplarily, the i^{th} characteristic authentication key is denoted as CHK*, the i^{th} piece of authentication information is denoted as "encrypted CHK-i*" or "protection information i*".

Authenticating, by the first network device and based on the one or more pieces of authentication information and the one or more pieces of verification information, the first user using the terminal includes: decrypting, by the first network device, the one or more pieces of authentication information based on the first parameter to acquire the one or more characteristic authentication keys; and authenticating, by the first network device, the first user using the terminal based on the one or more characteristic authentication keys and the one or more pieces of verification information, wherein the one or more pieces of verification information include the characteristic key of each of the one or more users.

Decrypting, by the first network device, the one or more pieces of authentication information based on the first parameter to acquire the one or more characteristic authentication keys may include: decrypting, by the first network device, the i^{th} piece of authentication information in the one or more pieces of authentication information based on the first parameter to acquire the i^{th} characteristic authentication key in the one or more characteristic authentication keys. A decryption algorithm used for the decryption calculation corresponds to the encryption algorithm, and is not limited in the embodiments.

Authenticating, by the first network device, the first user using the terminal based on the one or more characteristic authentication keys and the one or more pieces of verification information may include: comparing, by the first network device, a j^{th} characteristic authentication key in the one or more characteristic authentication keys with the characteristic key of each user, determining, in the case where the j^{th} characteristic authentication key matches a characteristic key of a k^{th} user, an identifier of the k^{th} user associated with the characteristic key of the k^{th} user as an identifier of the first user, and determining successful authentication of the first user, wherein j and k are both positive integers, and the k^{th} user is any user in the one or more users.

The processing performed by the first network device may further include: comparing, by the first network device, a (j+1)^{th} characteristic authentication key in the one or more characteristic authentication keys with the characteristic key of each user in the case where the j^{th} characteristic authentication key does not match the characteristic key of any user, and so on, until determining all the characteristic authentication keys.

In addition, the method may further include: determining, by the first network device, authentication failure of the first user of the terminal in the case where all the characteristic authentication keys are determined and no characteristic authentication key matches the characteristic key of any user.

It should be noted that the processing performed by the first network device may further include: determining, by the first network device, the j^{th} characteristic authentication key as a characteristic authentication key matching the first user in the case where the j^{th} characteristic authentication key matches the characteristic key of the k^{th} user.

In some embodiments, after the first network device receives the first message, the method further includes: transmitting, by the first network device, a third message. Accordingly, after the terminal transmits the first message, the method further includes: receiving, by the terminal, the third message.

Transmitting, by the first network device, the third message may include: transmitting, by the first network device, the third message to the terminal via one or more other network devices. Receiving, by the terminal, the third message may include: receiving, by the terminal, the third message from the first network device via one or more other network devices.

The third message is used to determine an authentication result of the first user. In some cases, the third message implicitly indicates the authentication result of the first user. For example, the terminal determines the authentication result of the first user based on the information carried in the third message. In some cases, the third message explicitly indicates the authentication result of the first user. For example, the third message may carry a first indication, and the first indication is used to indicate the authentication result of the first user.

In some embodiments, the third message implicitly indicates the authentication result of the first user.

In the embodiments, the third message carries identifier-related information of the first user, and the identifier-related information of the first user includes at least one of an identifier of the first user or a temporary identifier of the first user. The temporary identifier of the first user may be assigned by the first network device. The method for generating the temporary identifier of the first user is not limited in the embodiments.

After the terminal receives the third message, the method further includes: storing, by the terminal, the identifier-related information of the first user. Furthermore, in the case where the third message carries the identifier-related information of the first user, the terminal determines that the authentication result of the first user indicates successful authentication of the first user.

That is, upon successful authentication of the first user, the first network device implicitly indicates successful authentication of the first user by carrying the identifier-related information of the first user in the third message. Accordingly, in the case where the terminal receives the third message and the third message carries the identifier-related information of the first user, the terminal determines that the authentication result of the first user indicates successful authentication, and stores the identifier-related information of the first user.

In some embodiments, the third message explicitly indicates the authentication result of the first user.

In the embodiments, the third message carries the first indication, and the first indication is used to indicate the authentication result of the first user. Accordingly, upon receiving the third message, the terminal determines the authentication result of the first user from the first network device based on the first indication carried in the third message.

The authentication result of the first user may include: successful authentication of the first user, or failed authentication of the first user. The successful authentication of the first user may refer to successful authentication of the first user using the terminal, authentication success of the first user using the terminal, identity authentication success (or successful identity authentication) of the first user using the terminal, or the like. The failed authentication of the first user may refer to failed authentication of the first user using the terminal, authentication failure of the first user using the terminal, identity authentication failure (or failed identity authentication) of the first user using the terminal, or the like.

In some embodiments, in the case where the first indication carried in the third message is used to indicate successful authentication of the first user, the third message further carries the identifier-related information of the first user. Accordingly, upon receiving the third message, the terminal stores the identifier-related information of the first user. Furthermore, the terminal determines, based on the first indication, that the authentication result of the first user indicates successful authentication of the first user.

In some embodiments, in the case where the first indication carried in the third message is used to indicate failed authentication of the first user, the third message does not carry other information. Accordingly, upon receiving the third message, the terminal determines, based on the first indication, that the authentication result of the first user indicates failed authentication of the first user.

In some embodiments, storing, by the terminal, the identifier-related information of the first user includes at least one of: storing, by the terminal, a correspondence between the identifier-related information of the first user and authentication information matching the first user; or storing, by the terminal, a correspondence between the identifier-related information of the first user and a first parameter matching the first user.

The third message may further carry at least one of the authentication information matching the first user or a characteristic authentication key matching the first user. The method for the first network device to determine at least one of the authentication information matching the first user or the characteristic authentication key matching the first user has been described in detail in the foregoing embodiments, and is not repeated herein.

In some embodiments, the third message carries the authentication information matching the first user. In this case, the terminal stores the correspondence between the identifier-related information of the first user and the authentication information matching the first user.

In some embodiments, the third message carries the characteristic authentication key matching the first user. In this case, the terminal stores the correspondence between the identifier-related information of the first user and the characteristic authentication key matching the first user.

In some embodiments, the third message carries the authentication information matching the first user and the characteristic authentication key matching the first user. In this case, the terminal stores the correspondence between the identifier-related information of the first user and the authentication information matching the first user, and the terminal stores the correspondence between the identifier-related information of the first user and the characteristic authentication key matching the first user.

After the terminal stores the correspondence between the identifier-related information of the first user and the authentication information matching the first user, and/or the terminal stores the correspondence between the identifier-related information of the first user and the first parameter matching the first user, the processing performed by the terminal may further include at least one of the following cases.

In some cases, upon acquiring characteristic information of a second user, the terminal acquires one or more characteristic authentication keys corresponding to the second user based on the characteristic information of the second user and characteristic recovery information of one or more users. In the case where the one or more characteristic authentication keys corresponding to the second user are identical to the characteristic authentication key matching the first user, the terminal directly determines that the second user and the first user are the same user, and performs subsequent communication using the identifier-related information of the first user.

In some cases, upon acquiring characteristic information of a second user, the terminal acquires one or more characteristic authentication keys corresponding to the second user based on the characteristic information of the second user and characteristic recovery information of one or more users, and acquires one or more pieces of authentication information corresponding to the second user based on the one or more characteristic authentication keys and the first parameter. In the case where the one or more pieces of authentication information corresponding to the second user are identical to the authentication information matching the first user, the terminal directly determines that the second user and the first user are the same user, and performs subsequent communication using the identifier-related information of the first user.

In addition, the processing performed by the terminal may further include: determining, in response to determining that the second user is different from the first user, the second user as a new first user, and performing the same authentication processing on the second user as that for the first user, which is not repeated herein.

With such processing, in the case where the same user logs in on or uses the terminal next time (for example, the same user unlocks the screen with a fingerprint in the case of lock screen), and the terminal generates the same CHK* (i.e., the characteristic authentication key) or "protection information*" (i.e., the authentication information), the terminal directly determines the identifier of the user (or referred to as a user identifier) and/or the temporary identifier of the user (or referred to as a temporary user identifier).

In some embodiments, the terminal interacts with the second network device and the first network device, and the authentication processing on the first user using the terminal is jointly implemented by the first network device and the second network device.

In the embodiments, before the terminal transmits the first message, the method may further include: receiving, by the terminal, a second message. Receiving, by the terminal, the second message includes: receiving, by the terminal, the second message from the second network device.

Accordingly, before the second network device receives the first message from the terminal, the method may further include: receiving, by the second network device, a fifth message from the first network device, wherein the fifth message carries the one or more pieces of verification information; and transmitting, by the second network device, the second message to the terminal, wherein the second message carries a verification requirement for a user using the terminal.

The processing performed by the first network device may include: transmitting, by the first network device, the fifth message to the second network device, wherein the fifth message carries the one or more pieces of verification information. In some embodiments, in addition to the one or more pieces of verification information, the fifth message further carries the verification requirement for the user using the terminal.

Transmitting, by the second network device, the second message to the terminal may include: storing, by the second network device, the one or more pieces of verification information in the fifth message locally upon receiving the fifth message, and transmitting, by the second network device, the second message to the terminal, wherein the second message carries the verification requirement for the user using the terminal. It should be understood that the second network device may alternatively transmit the second message to the terminal via one or more other network devices. The one or more other network devices may include an access network device corresponding to the terminal, another core network device, or the like, which are not exhausted or limited herein.

In some embodiments, before the terminal receives the second message, the processing performed by the terminal further includes: transmitting, by the terminal, an authentication request to the first network device via one or more other network devices. Accordingly, before the first network device transmits the fifth message to the second network device, the method further includes: receiving, by the first network device, the authentication request from the terminal. The first network device receives the authentication request from the terminal via the second network device and the one or more other network devices.

It should be understood that this is merely a possible example for the terminal to trigger verification by the first network device. In some embodiments, the second network device alternatively transmits an authentication request to the first network device, and the authentication request at least carries an identifier of the terminal. Accordingly, before the first network device transmits the fifth message to the second network device, the method includes: receiving, by the first network device, the authentication request from the second network device.

In some embodiments, upon receiving the second message, the terminal calculates the one or more pieces of authentication information, wherein the one or more pieces of authentication information are acquired based on the characteristic information of the first user and the characteristic recovery information of the one or more users.

Upon acquiring the one or more pieces of authentication information through calculation, the terminal transmits the first message carrying the one or more pieces of authentication information. In the embodiments, transmitting, by the terminal, the first message may include: transmitting, by the terminal, the first message to the second network device.

Accordingly, after the second network device receives the first message from the terminal and before the second network device transmits a fourth message to the first network device, the method may include one of: determining, by the second network device, first verification information from the one or more pieces of verification information based on the one or more pieces of authentication information; or determining, by the second network device, first verification information from the one or more pieces of verification information and identification information of a user associated with the first verification information based on the one or more pieces of authentication information.

After the first network device receives the fourth message from the second network device, the method may include: determining, by the first network device and based on the verification result, an identifier of the first user and successful authentication of the first user using the terminal.

The verification result includes at least one of first verification information or identification information of a user associated with the first verification information, and the first verification information is one of the one or more pieces of verification information.

In some embodiments, the one or more pieces of authentication information include one or more characteristic authentication keys, and the one or more characteristic authentication keys are acquired based on the characteristic information of the first user and the characteristic recovery information of the one or more users. The one or more pieces of verification information include the characteristic key of each of the one or more users.

The characteristic information of the first user and the description of calculating each characteristic authentication key by the terminal are the same as those in the foregoing embodiments, and are not repeated herein. In addition, any characteristic authentication key may be denoted as CHK-i*, which is the same as that in the foregoing embodiments.

In the first network device, the one or more pieces of verification information are associated with identification information of one or more users capable of using the terminal, the identification information of each of the one or more users includes at least one of an identifier of the each of the one or more users or a serial number of the each of the one or more users, and the one or more users include the first user.

In some embodiments, the fifth message from the first network device to the second network device carries the one or more pieces of verification information. In this case, any of the one or more pieces of verification information is a characteristic key of any user capable of using the terminal. In the first network device, the characteristic key of each of the one or more users is stored in association with the identifier of the each of the one or more users and the characteristic recovery information of the each of the one or more users. The second network device only stores the characteristic key of each user (as the verification information) acquired based on the fifth message.

Determining, by the second network device, the first verification information from the one or more pieces of verification information based on the one or more pieces of authentication information may include: comparing, by the second network device, a j^{th} characteristic authentication key in the one or more characteristic authentication keys with the characteristic key of each user, and determining, in the case where the j^{th} characteristic authentication key matches a characteristic key of a k^{th} user, the characteristic key of the k^{th} user as the first verification information.

The processing performed by the second network device may further include: comparing, by the second network device, a (j+1)^{th} characteristic authentication key in the one or more characteristic authentication keys with the characteristic key of each user in the case where the j^{th} characteristic authentication key does not match the characteristic key of any user, and so on, until determining all the characteristic authentication keys. In addition, the method may further include: transmitting, by the second network device, a verification result to the first network device in the case where all the characteristic authentication keys are determined and no characteristic authentication key matches the characteristic key of any user, where thein verification result is used to indicate that the one or more pieces of authentication information do not match any verification information.

In this case, the verification result carried in the fourth message may only include the first verification information. Furthermore, since each piece of verification information in the embodiments is a characteristic key, the first verification information refers to a first characteristic key of the user.

After the first network device receives the fourth message from the second network device, the method further includes: determining, by the first network device and based on the verification result, an identifier of the first user and successful authentication of the first user using the terminal. Specifically, the first network device determines the identifier of the user associated with the first characteristic key of the user in the verification result, determines the identifier of the user as the identifier of the first user, and determines successful authentication of the first user using the terminal.

In some embodiments, the fifth message from the first network device to the second network device carries the one or more pieces of verification information, and the fifth message further carries identification information of one or more users capable of using the terminal and associated with the one or more pieces of verification information. Different pieces of verification information are associated with identification information of different users, the one or more users include the first user, and the identification information of each of the one or more users includes at least one of: an identifier of the each of the one or more users or a serial number of the each of the one or more users.

In this case, any piece of verification information in the one or more pieces of verification information is a characteristic key of any user capable of using the terminal. In the first network device, the characteristic key of each of the one or more users is stored in association with the identifier of the each of the one or more users and the characteristic recovery information of the each of the one or more users. The first network device may further assign a serial number corresponding to the identifier of each user. The second network device may include the characteristic key of each of the one or more users (as the verification information) acquired based on the fifth message, and the identification information of the user associated with the characteristic key of each user.

The serial number of each user is also referred to as a code of each user, a number of each user, or the like. The serial number of each user may be generated by the first network device. The serial number of each user corresponds to the identifier of the each user. The serial number of the user may at least function to enable uniquely identifying a user by the first network device and the second network device. Exemplarily, a correspondence between a serial number of user A and an identifier of user A is stored in the first network device. In this case, user A may be uniquely identified at least by transmitting the serial number of user A between the first network device and the second network device.

Determining, by the second network device, the first verification information from the one or more pieces of verification information and the identification information of the user associated with the first verification information based on the one or more pieces of authentication information may include: comparing, by the second network device, a j^{th} characteristic authentication key in the one or more characteristic authentication keys with the characteristic key of each user, determining, in the case where the j^{th} characteristic authentication key matches a characteristic key of a k^{th} user, the characteristic key of the k^{th} user as the first verification information, and determining the identification information of the user associated with the first verification information.

The processing performed by the second network device may further include: comparing, by the second network device, a (j+1)^{th} characteristic authentication key in the one or more characteristic authentication keys with the characteristic key of each user in the case where the j^{th} characteristic authentication key does not match the characteristic key of any user, and so on, until determining all the characteristic authentication keys. In addition, the method may further include: transmitting, by the second network device, a verification result to the first network device in the case where all the characteristic authentication keys are determined and no characteristic authentication key matches the characteristic key of any user, wherein the verification result is used to indicate that the one or more pieces of authentication information do not match any verification information.

In this case, the verification result carried in the fourth message may include at least one of the first verification information or the identification information of the user associated with the first verification information. Furthermore, since each piece of verification information in the embodiments is the characteristic key of each user, the first verification information may be the first characteristic key of the user.

Determining, by the first network device and based on the verification result, the identifier of the first user and successful authentication of the first user using the terminal may include at least one of:
extracting, by the first network device, the first characteristic key of the user from the verification result, acquiring the identifier of the user associated with the first characteristic key of the user, determining the identifier of the user as the identifier of the first user, and determining successful authentication of the first user using the terminal;
determining, by the first network device, the identifier of the user associated with the first characteristic key of the user in the verification result directly as the identifier of the first user, and determining successful authentication of the first user using the terminal; or
extracting, by the first network device, the serial number of the user associated with the first characteristic key of the user from the verification result, determining the identifier of the user corresponding to the serial number of the user as the identifier of the first user, and determining successful authentication of the first user using the terminal.

It should be noted that the processing performed by the first network device may further include: determining, by the first network device, the first characteristic key of the user as a characteristic authentication key matching the first user.

In some embodiments, the terminal acquires the one or more pieces of authentication information based on the first parameter and the one or more characteristic authentication keys, and the one or more characteristic authentication keys are acquired based on the characteristic information of the first user and the characteristic recovery information of the one or more users. The first network device acquires the one or more pieces of verification information based on the first parameter and the characteristic key of each of the one or more users.

In some embodiments, the first parameter is generated by the first network device. In the case where the first parameter is generated by the first network device, the first parameter is a random number. The method for the first network device to generate the random number is not limited in the embodiments. In this case, the fifth message further carries the first parameter, and the second message further carries the first parameter. That is, the first network device transmits the first parameter to the second network device via the fifth message, and the second network device transmits the first parameter to the terminal via the second message.

In some embodiments, the first parameter is generated by the terminal. In the case where the first parameter is generated by the terminal, the first parameter is a random number. The method for the terminal to generate the random number is not limited in the embodiments. In the case where the first parameter is generated by the terminal, the processing performed by the terminal further includes: transmitting, by the terminal, the first parameter.

Specifically, transmitting, by the terminal, the first parameter may refer to: transmitting, by the terminal, the first parameter to the second network device prior to transmitting the first message. Prior to transmitting the first message, the terminal may carry the first parameter in any uplink message and transmit the first parameter to the second network device.

Accordingly, before the second network device receives the fifth message from the first network device, the method further includes: receiving, by the second network device, the first parameter from the terminal; and transmitting, by the second network device, the first parameter to the first network device. Before the first network device transmits the fifth message to the second network device, the method further includes: receiving, by the first network device, the first parameter from the second network device.

In some embodiments, the first parameter is pre-configured. In the case where the first parameter is pre-configured, the first parameter may be the same parameter pre-configured in the terminal and the first network device. For example, the first parameter may be a related parameter of the terminal, and the related parameter of the terminal may be at least one of an identifier of the terminal, a device-related parameter of the terminal, or the like.

The method for the terminal to calculate any piece of authentication information is the same as that in the foregoing embodiments, and is not repeated herein.

The first network device acquires the one or more pieces of verification information based on the first parameter and the characteristic key of each of the one or more users. The one or more pieces of verification information are also referred to as one or more pieces of protection information. Accordingly, the one or more pieces of authentication information are also denoted as one or more pieces of "protection information*". The method for the first network device to calculate any piece of verification information is the same as that in the foregoing embodiments, and is not repeated herein. In addition, upon acquiring any piece of verification information through calculation, the first network device may further associate the verification information with the identifier of the user. It should be noted that an opportunity for the first network device to calculate the one or more pieces of verification information may be a time before the first network device transmits the fifth message to the second network device.

In some embodiments, the fifth message from the first network device to the second network device carries the one or more pieces of verification information. In this case, the first network device stores that the one or more pieces of verification information are associated with identification information of one or more users capable of using the terminal, different pieces of verification information are associated with identification information of different users, and the one or more users include the first user. The second network device only stores the verification information acquired based on the fifth message.

Determining, by the second network device, the first verification information from the one or more pieces of verification information based on the one or more pieces of authentication information may include: comparing, by the second network device, a j^{th} piece of authentication information in the one or more pieces of authentication information with each piece of verification information, and determining, in the case where the j^{th} piece of authentication information matches a k^{th} piece of verification information, the k^{th} piece of verification information as the first verification information.

The processing performed by the second network device may further include: comparing, by the first network device, a (j+1)^{th} piece of authentication information in the one or more pieces of authentication information with each piece of verification information in the case where the j^{th} piece of authentication information does not match any piece of verification information, and so on, until determining that all pieces of authentication information. In addition, the method may further include: transmitting, by the second network device, a verification result to the first network device in the case where all pieces of authentication information are determined and no authentication information matches the verification information of any user, wherein the verification result is used to indicate that the one or more pieces of authentication information do not match any verification information.

In this case, the verification result carried in the fourth message may only include the first verification information.

After the first network device receives the fourth message from the second network device, the method further includes: determining, by the first network device and based on the verification result, an identifier of the first user and successful authentication of the first user using the terminal. Specifically, the first network device determines identification information of a user associated with the first verification information in the verification result, determines an identifier of the user based on the identification information of the user, determines the identifier of the user as the identifier of the first user, and determines successful authentication of the first user using the terminal. Determining the identifier of the user based on the identification information of the user may include: directly determining the identifier of the user in the case where the identification information of the user includes the identifier of the user; and/or determining the identifier of the user corresponding to a serial number of the user in the case where the identification information of the user includes the serial number of the user.

In some embodiments, the fifth message from the first network device to the second network device carries the one or more pieces of verification information, and the fifth message further carries identification information of one or more users capable of using the terminal and associated with the one or more pieces of verification information. Different pieces of verification information are associated with identification information of different users, the one or more users include the first user, and the identification information of each of the one or more users includes at least one of an identifier of the each of the one or more users or a serial number of the each of the one or more users.

In this case, the first network device stores that the one or more pieces of verification information are associated with identifiers of one or more users capable of using the terminal, different pieces of verification information are associated with identifiers of different users, and the one or more users include the first user. The second network device may include each piece of verification information acquired based on the fifth message, and identification information of a user associated with each piece of verification information.

Determining, by the second network device, the first verification information from the one or more pieces of verification information and the identification information of the user associated with the first verification information based on the one or more pieces of authentication information may include: comparing, by the second network device, a j^{th} piece of authentication information in the one or more pieces of authentication information with each piece of verification information, determining, in the case where the j^{th} piece of authentication information matches a k^{th} piece of verification information, the k^{th} piece of verification information as the first verification information, and determining the identification information of the user associated with the first verification information.

The processing performed by the second network device may further include: comparing, by the first network device, a (j+1)^{th} piece of authentication information in the one or more pieces of authentication information with each piece of verification information in the case where the j^{th} piece of authentication information does not match any piece of verification information, and so on, until determining all pieces of authentication information. In addition, the method may further include: transmitting a verification result to the first network device in the case where all pieces of authentication information are determined and no authentication information matches the verification information of any user, wherein the verification result is used to indicate that the one or more pieces of authentication information do not match any verification information.

In this case, the verification result carried in the fourth message may include at least one of the first verification information or the identification information of the user associated with the first verification information.

Determining, by the first network device and based on the verification result, the identifier of the first user and successful authentication of the first user using the terminal may include at least one of:
extracting, by the first network device, the first verification information from the verification result, acquiring the identifier of the user associated with the first verification information, determining the identifier of the user as the identifier of the first user, and determining successful authentication of the first user using the terminal;
determining, by the first network device, the identifier of the user associated with the first verification information in the verification result directly as the identifier of the first user, and determining successful authentication of the first user using the terminal; or
extracting, by the first network device, the serial number of the user associated with the first verification information from the verification result, determining the identifier of the user corresponding to the serial number of the user as the identifier of the first user, and determining successful authentication of the first user using the terminal.

It should be noted that the processing performed by the first network device may further include: determining, by the first network device, the first verification information as authentication information matching the first user.

In some embodiments, the one or more pieces of authentication information are acquired by encrypting the one or more characteristic authentication keys based on the first parameter. The one or more pieces of verification information include the characteristic key of each of the one or more users.

The method for the terminal to calculate the i^{th}piece of authentication information is the same as that in the foregoing embodiments, and is not repeated herein.

In some embodiments, the fifth message from the first network device to the second network device carries the one or more pieces of verification information. In this case, any piece of verification information in the one or more pieces of verification information is a characteristic key of any user capable of using the terminal. In the first network device, the characteristic key of each of the one or more users is stored in association with the identifier of the each of the one or more users and the characteristic recovery information of the each of the one or more users. The second network device only stores the characteristic key of each of the one or more users (as the verification information) acquired based on the fifth message.

Determining, by the second network device, the first verification information from the one or more pieces of verification information based on the one or more pieces of authentication information includes: decrypting, by the second network device, the one or more pieces of authentication information based on a first parameter to acquire one or more characteristic authentication keys; and determining, by the second network device, the first verification information from the one or more pieces of verification information based on the one or more characteristic authentication keys, wherein the one or more pieces of verification information include a characteristic key of each of the one or more users. A decryption algorithm used for the decryption calculation corresponds to the encryption algorithm, and is not limited in the embodiments.

Determining, by the second network device, the first verification information from the one or more pieces of verification information based on the one or more characteristic authentication keys may include: comparing, by the second network device, a j^{th} characteristic authentication key in the one or more characteristic authentication keys with the characteristic key of each user, and determining, in the case where the j^{th} characteristic authentication key matches a characteristic key of a k^{th} user, the characteristic key of the k^{th} user as the first verification information. The processing performed by the second network device may further include: transmitting, by the second network device, a verification result to the first network device in the case where all the characteristic authentication keys are determined and no characteristic authentication key matches the characteristic key of any user. The verification result is used to indicate that the one or more pieces of authentication information do not match any verification information.

In this case, the verification result carried in the fourth message may only include the first verification information. Furthermore, since each piece of verification information in the embodiments is a characteristic key, the first verification information refers to a first characteristic key of the user. Accordingly, the processing performed by the first network device is the same as the related processing performed by the first network device in the foregoing embodiments where the fourth message carries the first verification information and the first verification information is the first characteristic key of the user, and is therefore not repeated herein.

In some embodiments, the fifth message from the first network device to the second network device carries the one or more pieces of verification information, and the fifth message further carries identification information of one or more users capable of using the terminal and associated with the one or more pieces of verification information. Different pieces of verification information are associated with identification information of different users, the one or more users include the first user, and the identification information of each of the one or more users includes at least one of an identifier of the each of the one or more users or a serial number of the each of the one or more users.

In this case, any piece of verification information in the one or more pieces of verification information is a characteristic key of any user capable of using the terminal. In the first network device, the characteristic key of each of the one or more users is stored in association with the identifier of the each of the one or more users and the characteristic recovery information of the each of the one or more users. The first network device may further assign a serial number corresponding to the identifier of each of the one or more users. The second network device may include the characteristic key of each of the one or more users (as the verification information) acquired based on the fifth message, and the identification information of the user associated with the characteristic key of each user.

Determining, by the second network device, the first verification information from the one or more pieces of verification information and the identification information of the user associated with the first verification information based on the one or more pieces of authentication information may include: decrypting, by the second network device, the one or more pieces of authentication information based on a first parameter to acquire one or more characteristic authentication keys; and determining, by the second network device, the first verification information from the one or more pieces of verification information and the identification information of the user associated with the first verification information based on the one or more characteristic authentication keys. The processing of decrypting, by the second network device, the one or more pieces of authentication information based on the first parameter to acquire the one or more characteristic authentication keys and the processing of determining, by the second network device, the first verification information from the one or more pieces of verification information based on the one or more characteristic authentication keys are the same as those in the foregoing embodiments, and are not repeated herein.

In this case, the verification result carried in the fourth message may include at least one of the first verification information or the identification information of the user associated with the first verification information. Furthermore, since each piece of verification information in the embodiments is the characteristic key of each user, the first verification information may be the first characteristic key of the user. The processing performed by the first network device is the same as the related processing performed by the first network device in the foregoing embodiments where the fourth message carries the first verification information and the identification information of the user associated with the first verification information and the first verification information is the first characteristic key of the user, and is therefore not repeated herein.

In some embodiments, after the first network device receives the fourth message from the second network device, the method further includes: transmitting, by the first network device, a sixth message to the second network device. After the second network device transmits the fourth message to the first network device, the method further includes: receiving, by the second network device, the sixth message from the first network device, wherein the sixth message carries an identifier of the first user; and transmitting, by the second network device, a third message to the terminal, wherein the third message carries identifier-related information of the first user, and the identifier-related information of the first user includes at least one of the identifier of the first user or a temporary identifier of the first user.

Accordingly, after the terminal transmits the first message, the method further includes: receiving, by the terminal, the third message. Receiving, by the terminal, the third message refer to: receiving, by the terminal, the third message from the second network device.

In some embodiments, the sixth message further carries the temporary identifier of the first user, and the method further includes: assigning, by the first network device, the temporary identifier to the first user. In this case, the second network device carries the identifier of the first user and the temporary identifier of the first user in the third message transmitted to the terminal. Alternatively, the second network device carries only the temporary identifier of the first user in the third message.

In some embodiments, the first network device does not assign the temporary identifier to the first user, and the second network device assigns the temporary identifier to the first user.

In this case, the sixth message only carries the identifier of the first user. Before the second network device transmits the third message to the terminal, the method further includes: assigning, by the second network device, the temporary identifier to the first user. After the second network device assigns the temporary identifier to the first user, the second network device may carry the identifier of the first user and the temporary identifier of the first user in the third message. Alternatively, the second network device may carry only the temporary identifier of the first user in the third message.

The third message is used for the terminal to determine an authentication result of the first user. Accordingly, the sixth message may also be used for the terminal to determine the authentication result of the first user.

Two cases are possible for the third message (and the sixth message) being used to determine the authentication result of the first user. In one case, the third message (and the sixth message) implicitly indicates the authentication result of the first user. For example, the terminal determines the authentication result of the first user based on the information carried in the third message (and the sixth message). In another case, the third message (and the sixth message) explicitly indicates the authentication result of the first user. For example, the third message (and the sixth message) may carry a first indication, and the first indication is used to indicate the authentication result of the first user.

In some embodiments, the third message and the sixth message implicitly indicate the authentication result of the first user.

In the embodiments, the sixth message carries the identifier of the first user, or the sixth message carries the identifier of the first user and the temporary identifier of the first user. Accordingly, the third message carries the identifier-related information of the first user. After the terminal receives the third message from the second network device, the method further includes: storing, by the terminal, the identifier-related information of the first user. Furthermore, in the case where the third message carries the identifier-related information of the first user, the terminal may determine that the authentication result of the first user indicates successful authentication of the first user.

That is, upon determining successful authentication of the first user, the first network device may implicitly indicate successful authentication of the first user by carrying at least the identifier of the first user in the sixth message. Upon receiving the sixth message, the second network device transmits the third message to the terminal. Accordingly, in the case where the terminal receives the third message from the second network device and the third message carries the identifier-related information of the first user, the terminal may determine that the authentication result of the first user indicates successful authentication, and store the identifier-related information of the first user.

In some embodiments, the third message and the sixth message explicitly indicate the authentication result of the first user.

In the embodiments, the sixth message carries the first indication, and the first indication is used to indicate the authentication result of the first user. Accordingly, the third message also carries the first indication. Upon receiving the third message from the second network device, the terminal determines the authentication result of the first user from the first network device based on the first indication carried in the third message.

The authentication result of the first user may include successful authentication of the first user, or failed authentication of the first user.

In some embodiments, in the case where the first indication carried in the sixth message is used to indicate successful authentication of the first user, the sixth message further carries the identifier of the first user, or the sixth message carries the identifier of the first user and the temporary identifier of the first user. Accordingly, the third message carries the first indication used to indicate successful authentication of the first user and the identifier-related information of the first user. Upon receiving the third message from the second network device, the terminal stores the identifier-related information of the first user. Furthermore, the terminal determines, based on the first indication, that the authentication result of the first user indicates successful authentication of the first user.

In some embodiments, in the case where the first indication carried in the sixth message is used to indicate failed authentication of the first user, the sixth message does not carry other content. Accordingly, the third message also carries only the first indication used to indicate failed authentication of the first user, and does not carry other information. Upon receiving the third message from the second network device, the terminal determines, based on the first indication, that the authentication result of the first user indicates failed authentication of the first user.

In some embodiments, storing, by the terminal, the identifier-related information of the first user includes at least one of: storing, by the terminal, a correspondence between the identifier-related information of the first user and authentication information matching the first user; or storing, by the terminal, a correspondence between the identifier-related information of the first user and a first parameter matching the first user.

The sixth message may further carry at least one of the authentication information matching the first user or a characteristic authentication key matching the first user. The method for the first network device to determine at least one of the authentication information matching the first user or the characteristic authentication key matching the first user has been described in detail in the foregoing embodiments, and is not repeated herein. Similarly, the third message may further carry at least one of the authentication information matching the first user or the characteristic authentication key matching the first user.

After the terminal receives the third message, storing, by the terminal, the correspondence between the identifier-related information of the first user and the authentication information matching the first user and/or storing, by the terminal, the correspondence between the identifier-related information of the first user and the first parameter matching the first user is the same as that in the foregoing embodiments, and is not repeated herein.

Related principles of the authentication method according to the embodiments are illustrated with reference to FIG. 11. Characteristic recovery information (for example, an AR in FIG. 11) of users is stored in a USIM card of a terminal, and identity information (including an AR/CHK/user ID) of the users is stored in the network. On this basis, assuming that user A inputs character CH' (which may differ from CH in a registration phase) into the terminal, the terminal acquires an output CHK* based on the AR of the user locally stored in the USIM using an algorithm B (for example, a fuzzy extractor recovery (Rep) algorithm) with the CH' and the AR of the user as inputs. In this case, the user and the network possess the same secret information (for example, the CHK* corresponding to the user, and the CHK on the network). Due to the uniqueness of the biometric character, the secret information is unique. In this case, (unidirectional or bidirectional) authentication (for example, an EAP-PSK interaction process) may be implemented based on the secret information. Furthermore, in the case where identity information of a plurality of users (specifically, ARs of the plurality of users) are stored in the USIM card on the terminal, since the terminal currently fails to determine which user is using the terminal, the user currently using the terminal needs to be authenticated in the manner illustrated in FIG. 11 by generating CHK* separately using each piece of stored identity information (which refers to the AR of each user herein) and the CH of the current user (which refers to the CH of user A herein).

The authentication method according to the embodiments is illustrated hereinafter in combination with various embodiments.

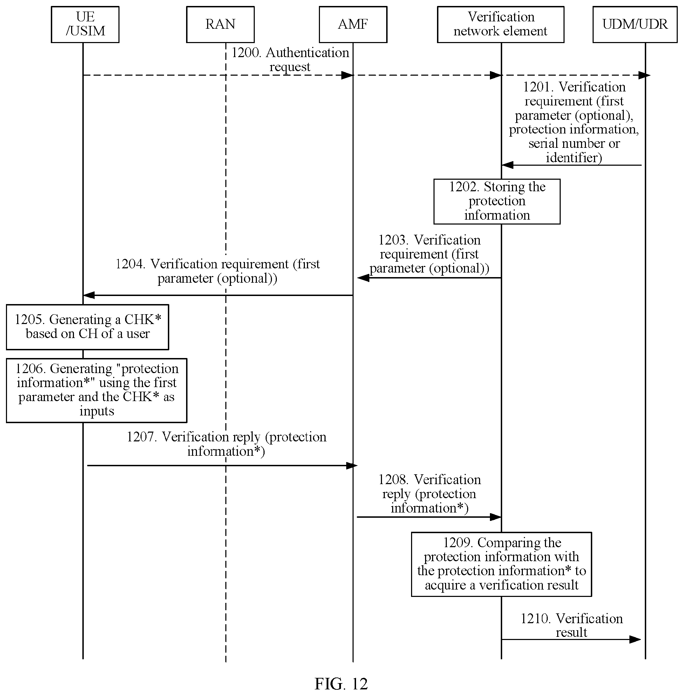

Referring to FIG. 12, the above authentication method is illustrated using an example in which the terminal is a UE (in FIG. 12, the terminal is illustrated as a UE/USIM to indicate characteristic recovery information of one or more users pre-configured in the USIM of the UE), the first network device is a UDM/UDR, and the second network device is a verification network element.

In S1200 (optional), an authentication request is triggered by a node in the UE, an AMF, or the verification network element. In the case where the authentication request is triggered by the UE, the AMF and the verification network element need to forward the request to the UDM/UDR. Alternatively, the AMF or the verification network element directly transmits the authentication request to the UDM/UDR.

In S1201, a verification requirement is triggered by the UDM/UDR. The verification requirement may carry at least one of a first parameter (optional), protection information, a serial number, an identifier. One or more pieces of protection information may be provided, and the one or more pieces of protection information are the one or more pieces of verification information in the foregoing embodiments. The serial number refers to a serial number of the user, the identifier refers to an identifier of the user, and the serial number or the identifier is the identification information of the user in the foregoing embodiments. The verification requirement may be transmitted by the UDM/UDR to the verification network element, and the verification requirement may be the fifth message in the foregoing embodiments.

The first parameter is used for the UE to generate protection information* (i.e., the one or more pieces of authentication information in the foregoing embodiments). The first parameter may be a random value randomly generated by the UDM/UDR or a parameter related to the UE. In the case where the verification requirement does not include the "first parameter", the UE and the UDM/UDR may use a statically configured or agreed "first parameter". For example, an IMSI stored in a SIM card of the UE may be used as the first parameter for subsequent authentication process.

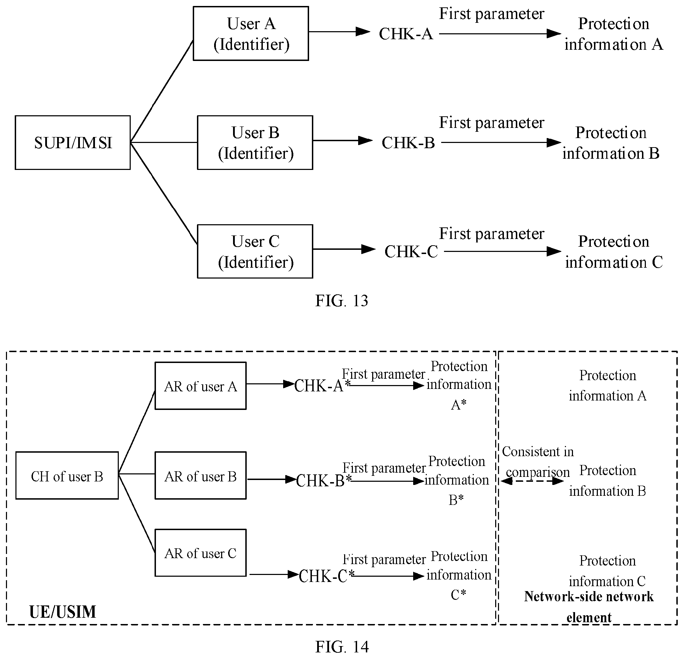

Regarding the protection information and the user identifier or the serial number (optional) corresponding to the protection information, the protection information is generated based on the CHK (i.e., the characteristic key of each user in the foregoing embodiments) corresponding to the user (the identifier of the user) and the first parameter using a specific algorithm (for example, a hash algorithm, which is not limited herein). Referring to FIG. 13, in the case where an IMSI/SUPI of one UE corresponds to a plurality of users, for example, user A (an identifier), user B (an identifier), and user C (an identifier) in FIG. 13, the "protection information" corresponding to each user is separately generated based on the CHK of the each user (i.e., CHK-A, CHK-B, and CHK-C in FIG. 13) and the first parameter. For example, protection information A corresponding to user A, protection information B corresponding to user B, and protection information C corresponding to user C are separately generated in FIG. 13. The protection information is used for subsequent verification and comparison of the user. In the case where a message carries the protection information, the message is stored by the verification network element (see S1202).

It should be noted that the user identifier (or referred to as the identifier of the user) refers to an identifier assigned by an operator to the user, and is an invariable parameter. The serial number may refer to a serial number temporarily assigned to each user, and corresponds to different pieces of protection information. The UDM/UDR may identify the actual user identifier based on the serial number.

In S1202, the verification network element receives the verification requirement from the UDM/UDR, and stores the protection information (if any) for use of subsequent verification.

In S1203 to S1204, the verification network element transmits to the AMF the verification requirement, and the first parameter (if any); and the AMF transmits to the UE a downlink NAS message, such as the verification requirement, and the first parameter (if any). The verification requirement transmitted by the verification network element to the UE via the AMF may be the second message in the foregoing embodiments.

In S1205, upon receiving the verification requirement, the UE generates a CHK* (i.e., the one or more characteristic authentication keys in the foregoing embodiments) based on CH of the user.

For example, the CHK* is generated in the manner on the terminal in FIG. 11, which is not repeated herein. In the UE, in the case where assistance information (ARs) (i.e., the characteristic recovery information of each of the one or more users in the foregoing embodiments) of a plurality of users, e.g., user A, user B, and user C, is recorded in the USIM card, CHK-A*, CHK-B*, and CHK-C* need to be generated separately based on the CH of the three users and each AR stored in the USIM. It should be understood that the method for generating each CHK* is not limited to the method illustrated in FIG. 11. The CHK* may alternatively be generated based on the CH using other parameters and algorithms, which are not exhausted or limited herein.

In S1206, upon generating one or more CHKs*, the UE generates "protection information*" (that is, the authentication information in the foregoing embodiments) by using the first parameter and the CHKs* as inputs.

The generation algorithm for generating the protection information* is not limited or exhausted. For example, the generation algorithm is a hash algorithm.

It should be understood that in the case where the assistance information (ARs) of a plurality of users is stored in the USIM card, the "protection information*" is generated for each of the plurality of users. This processing is consistent with the principle in S1201 based on which the UDM/UDR generates the one or more pieces of protection information.

In S1207 to S1208, the UE transmits the generated "protection information*" to the AMF via an uplink NAS message such as a verification reply, and the AMF transmits the verification reply to the verification network element. The verification reply may be the first message in the foregoing embodiments.

In S1209, upon acquiring one or more pieces of "protection information*" from the AMF, the verification network element compares the protection information stored in S1202 with the received protection information* to acquire a verification result. The verification network element may determine a specific piece of protection information with which the protection information* is consistent (or within a specific error range) in comparison. This comparison may involve many-to-many comparison.

Referring to FIG. 14, taking user A, user B, and user C as an example, an AR of user A, an AR of user B, and an AR of user C are stored in the UE/USIM. CHK-A*, CHK-B*, and CHK-C* are separately acquired through calculation based on the CH of user B and the above ARs. Then, protection information A*, protection information B*, and protection information C* are separately acquired through calculation based on the first parameter and CHK-A*, CHK-B*, and CHK-C*. Since the UE inputs the CH of user B, only CHK-B* generated using the AR corresponding to user B is correct, and thus only the "protection information*" corresponding to user B is correct. Since the protection information of user A, user B, and user C generated by the UDM/UDR is generated using the correct CHK, protection information A, protection information B, and protection information C received by a network-side network element (which may be the verification network element in this example) from the UDM/UDR are all correct. In this way, the network-side network element (which may be the verification network element in this example) may determine, through comparison, that only the "protection information*" corresponding to user B is consistent with the "protection information" received from the UDM/UDR. It should be understood that this example is illustrated using an example where the network-side network element is the verification network element. In actual processing, the network-side network element in the scenario illustrated in FIG. 14 may be replaced with another possible network element, though this example is not exhaustive, and FIG. 14 is not intended to limit all possible scenarios.

It should be noted that in the comparison process, each piece of protection information x* need to be compared one-by-one with each piece of protection information x. For example, protection information A* is separately compared with protection information A/B/C, and then protection information B* is separately compared with protection information A/B/C, and so on. Finally, only one piece of protection information x* is consistent with its corresponding protection information x in comparison.

In S1210, the verification network element transmits the verification result (i.e., the protection information consistent in comparison, and one or more of a user identifier or a serial number corresponding to the protection information) to the UDM/UDR, and the UDM/UDR determines the identity (the identifier) of the user using the terminal based on the verification result. In the case where the verification network element only transmits the protection information to the UDM/UDR, the UDM/UDR may determine the user identity based on a locally stored correspondence between the verification information and the user identifier. The verification result may be carried in the fourth message in the foregoing embodiments.

It should be further noted that the comparison in the procedure in FIG. 12 is performed at the verification network element, though the comparison may be alternatively performed at another network element. For example, the "protection information*" is transmitted to the UDM/UDR for comparison. In addition, since the comparison is performed using the "protection information", the algorithm for generating the protection information may be a one-way irreversible algorithm, such as the hash algorithm. In this way, the CHK cannot be reversely deduced from the "protection information", thereby ensuring security of the CHK.

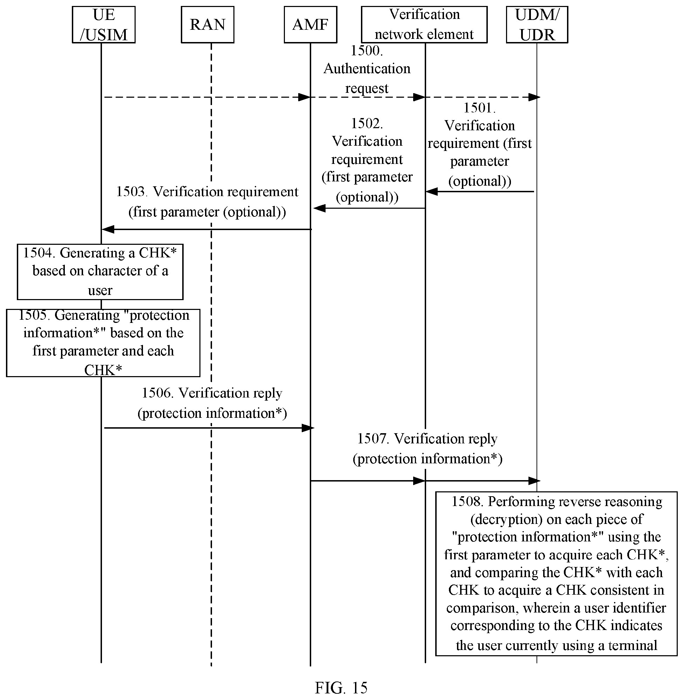

Referring to FIG. 15, the above authentication method is illustrated using another example in which the terminal is a UE (in FIG. 12, the terminal is illustrated as a UE/USIM to indicate characteristic recovery information of one or more users pre-configured in the USIM of the UE), the first network device is a UDM/UDR, and the second network device is a verification network element.

S1500 is the same as S1200, and the description of the process is not repeated.

S1501 is similar to S1201, except that "protection information" is not carried as the "protection information" is stored by the UDM/UDR for subsequent verification.

S1502 to S1503 are similar to S1203 to S1204, except that the verification network element does not need to store information, and the description of the processes is not repeated herein.

In S1504, upon receiving the verification requirement, the UE generates a CHK* based on CH of the user. One or more CHKs* may be generated, that is, the one or more characteristic authentication keys in the foregoing embodiments.

In S1505, upon generating the one or more CHKs*, the UE generates "protection information*" (that is, the authentication information in the foregoing embodiments) based on the first parameter and each CHK*. An algorithm for generating each piece of "protection information*" based on each CHK* and the first parameter is a reversible algorithm. That is, a peer end acquires the CHK* for comparison through decryption. Generally, a symmetric encryption-like algorithm is used, which is not limited herein.

S1506 is the same as S1207, and is not repeated herein.

In S1507, the AMF transmits, to the UDM/UDR, a message carrying one or more pieces of "protection information*". For example, the message is transmitted via the verification network element, or is transmitted directly.

In S1508, the UDM/UDR performs reverse reasoning (decryption) on each piece of "protection information*" using the first parameter to acquire each CHK*, and compares the CHK* with each CHK corresponding to the IMSI/SUPI stored in the UDM/UDR to acquire a CHK consistent in comparison. A user identifier corresponding to the CHK indicates the user currently using the terminal.

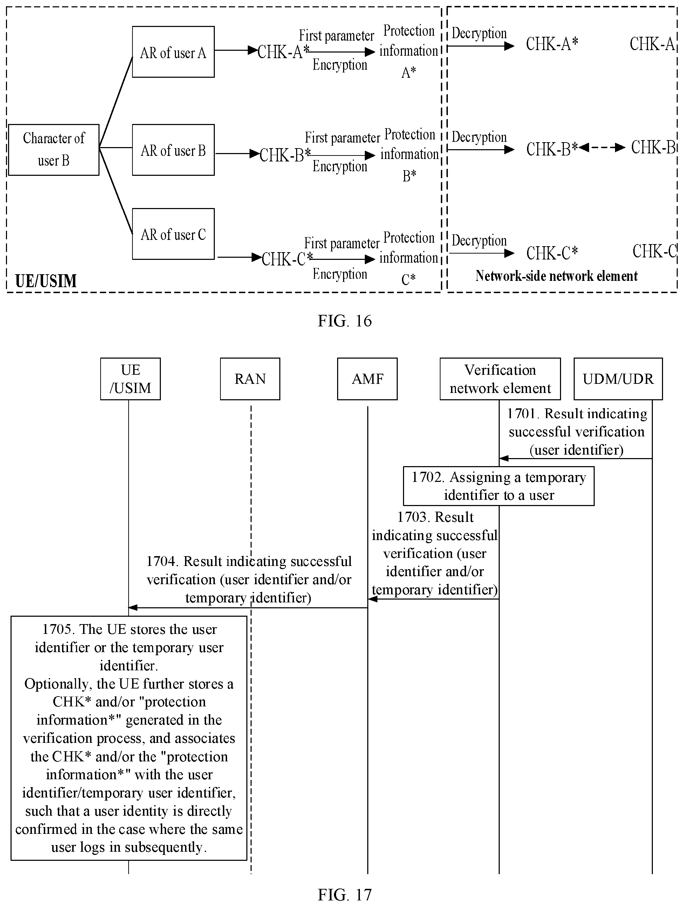

For example, referring to FIG. 16, taking user A, user B, and user C as an example for illustration, an AR of user A, an AR of user B, and an AR of user C are stored in the UE/USIM. CHK-A*, CHK-B*, and CHK-C* are separately acquired through calculation based on the CH of user B and the above ARs. Then, protection information A*, protection information B*, and protection information C* are separately acquired through encryption calculation based on the first parameter and CHK-A*, CHK-B*, and CHK-C*. Since the UE inputs the CH of user B, only CHK-B* generated using the AR corresponding to user B is correct, and thus only the "protection information*" corresponding to user B is correct. The network-side network element (for example, the UDM/UDR) acquires CHK-A*, CHK-B*, and CHK-C* by performing decryption calculation separately based on the first parameter and protection information A*, protection information B*, and protection information C*, and compares CHK-A*, CHK-B*, and CHK-C* with CHK-A, CHK-B, and CHK-C stored in the network-side network element. Since CHK-A, CHK-B, and CHK-C stored in the network-side network element (for example, the UDM/UDR) are all correct, the network-side network element (for example, the UDM/UDR) may determine, through comparison, that only CHK-B* corresponding to user B is consistent with CHK-B stored in the network-side network element (for example, the UDM/UDR). It should be understood that this example is illustrated using an example where the network-side network element is the UDM/UDR. In actual processing, the network-side network element in the scenario illustrated in FIG. 16 may be replaced with another possible network element, such as the verification network element, though this example is not exhaustive, and FIG. 16 is not intended to limit all possible scenarios.

It should be understood that through encryption/decryption, the CHK can be prevented from being directly transmitted, thereby improving security. However, in this solution, the CHK may alternatively be directly transmitted. In this case, the terminal or the network does not need to generate the "protection information". In the procedure illustrated in FIG. 15, the UDM/UDR performs CHK comparison as the CHK is sensitive information and should not be exposed to other network elements or nodes, which is more secure. However, this solution may also be extended to allow another node to perform CHK comparison, for example, to allow the verification network element to perform CHK comparison. In this case, in S1501, the protection information, the corresponding algorithm, or an explicit CHK list needs to be included and provided to the verification network element. Related processing has been described in detail in the foregoing embodiments, and is not repeated herein.

Referring to FIG. 17, the above authentication method is illustrated using still another example in which the terminal is a UE (in FIG. 17, the terminal is illustrated as a UE/USIM to indicate characteristic recovery information of one or more users pre-configured in the USIM of the UE), the first network device is a UDM/UDR, and the second network device is a verification network element.

In S1701 to S1703, upon successful verification, the UDM/UDR confirms the user identifier of the user currently using the UE, carries the user identifier in a result indicating successful verification, and transmits the result to the verification network element; and the verification network element carries the user identifier (and/or a temporary user identifier) in the result indicating successful verification, and transmits the result to the AMF. The result indicating successful verification transmitted by the UDM/UDR is the sixth message in the foregoing embodiments.

The user identifier is the identifier of the first user in the foregoing embodiments.

In some embodiments, the UDM/UDR further generates the corresponding temporary user identifier (i.e., the temporary identifier of the first user in the foregoing embodiments), and transmits the temporary user identifier to the verification network element.

In some embodiments, the temporary user identifier is generated at the verification network element or the AMF. In this case, the verification network element or the AMF includes a correspondence between the user identifier and the temporary user identifier.

In S1704, the AMF notifies the UE of the result indicating successful verification via a downlink NAS message (i.e., the third message in the foregoing embodiments), wherein the result includes at least one of: whether the verification succeeds (whether the user is allowed to use the terminal); the user identifier of the user; or the temporary user identifier of the user.

In S1705, upon receiving the verification result, the UE stores the user identifier or the temporary user identifier. In some embodiments, the UE further stores the CHK* and/or the "protection information*" generated in the verification process, and associates the CHK* and/or the "protection information*" with the user identifier/temporary user identifier, such that the user identity is directly confirmed in the case where the same user logs in subsequently. For example, in the case where the same user logs in next time (for example, unlocking the screen with a fingerprint upon lock screen) and the same CHK or "protection information" is generated locally, the user identifier/temporary user identifier of the user is directly confirmed.

It should be noted that another network device, such as the RAN, is further illustrated in FIGS. 12, 15, and 17. The RAN may be an access network device serving the UE, and the function of the RAN in the examples in FIGS. 12, 15, and 17 is not limited.

In the solutions according to the above embodiments, the terminal transmits the first message, such that the network authenticates the first user using the terminal based on various pieces of authentication information carried in the first message, where the various pieces of authentication information are generated based on the characteristic recovery information of each user and the characteristic information of the current first user. In this way, in the case where different users log in on the same terminal, the network may distinguish and authenticate different users, thereby ensuring security of each user.

In addition, upon successful authentication of the first user, the network determines the identifier of the first user and/or the temporary identifier of the first user, such that different users using the same terminal are accurately identified. Furthermore, since the terminal may store a related authentication parameter corresponding to the successfully authenticated user, authentication for subsequent logins by the same user on the same terminal is avoided, thereby improving processing efficiency. Moreover, the authentication method according to the present disclosure utilizes existing procedures and mechanisms, and this has better compatibility.

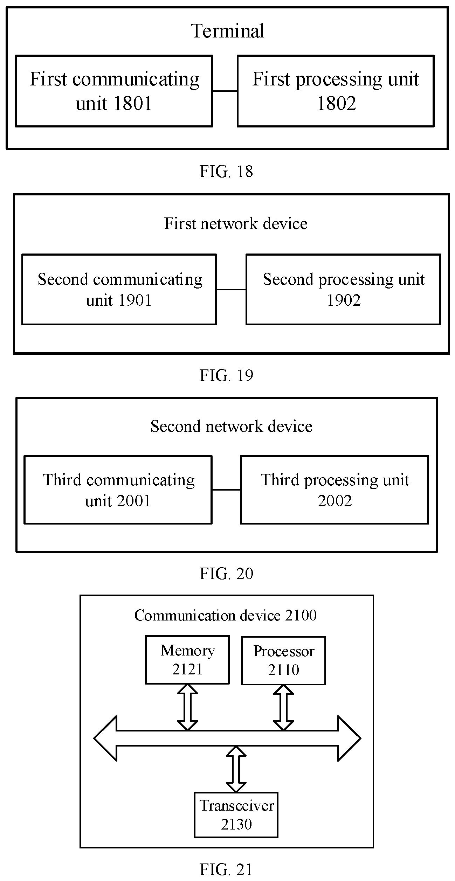

FIG. 18 is a schematic block diagram of a terminal according to some embodiments of the present disclosure. The terminal includes the following units.

A first communicating unit 1801, configured to transmit a first message, wherein the first message carries one or more pieces of authentication information, wherein the one or more pieces of authentication information are used to authenticate a first user using the terminal, and different pieces of authentication information in the one or more pieces of authentication information are related to characteristic information of the first user and characteristic recovery information of different users.

The one or more pieces of authentication information include one or more characteristic authentication keys, wherein the one or more characteristic authentication keys are acquired based on the characteristic information of the first user and characteristic recovery information of one or more users.

The one or more pieces of authentication information are acquired based on a first parameter and one or more characteristic authentication keys, wherein the one or more characteristic authentication keys are acquired based on the characteristic information of the first user and characteristic recovery information of one or more users.

The one or more pieces of authentication information are acquired by encrypting the one or more characteristic authentication keys based on the first parameter.

The characteristic recovery information of each of the one or more users is pre-configured, the one or more users are users capable of using the terminal, and the one or more users include the first user.

The first communicating unit is configured to receive a second message, wherein the second message carries a verification requirement for a user using the terminal.

The second message further carries the first parameter.

The first parameter is generated by the terminal or is pre-configured.

In a case where the first parameter is generated by the terminal, the first communicating unit is configured to transmit the first parameter.

The first communicating unit is configured to receive a third message, wherein the third message carries identifier-related information of the first user, wherein the identifier-related information of the first user includes at least one of an identifier of the first user or a temporary identifier of the first user.

As illustrated in FIG. 18, the terminal further includes a first processing unit 1802, configured to store the identifier-related information of the first user.

The first processing unit is configured to perform at least one of: storing a correspondence between the identifier-related information of the first user and authentication information matching the first user; or storing a correspondence between the identifier-related information of the first user and a characteristic authentication key matching the first user.

The third message is used for the terminal to determine an authentication result of the first user.

FIG. 19 is a schematic block diagram of a first network device according to some embodiments of the present disclosure. The first network device includes the following units.

A second communicating unit 1901, configured to receive a first message, wherein the first message carries one or more pieces of authentication information, wherein the one or more pieces of authentication information are used to authenticate a first user using a terminal, and different pieces of authentication information in the one or more pieces of authentication information are related to characteristic information of the first user and characteristic recovery information of different users.

As illustrated in FIG. 19, the first network device further includes a second processing unit 1902, configured to authenticate, based on the one or more pieces of authentication information and one or more pieces of verification information, the first user using the terminal, wherein the one or more pieces of verification information are associated with identification information of one or more users capable of using the terminal, different pieces of verification information are associated with identification information of different users, the identification information of each of the one or more users includes at least one of an identifier of the each of the one or more users or a serial number of the each of the one or more users, and the one or more users include the first user.

The one or more pieces of authentication information include one or more characteristic authentication keys, and the one or more pieces of verification information include a characteristic key of each of the one or more users.

The one or more pieces of verification information are acquired based on a first parameter and a characteristic key of each of the one or more users.

The second processing unit is configured to acquire one or more characteristic authentication keys by decrypting the one or more pieces of authentication information based on a first parameter; and authenticate the first user using the terminal based on the one or more characteristic authentication keys and the one or more pieces of verification information, wherein the one or more pieces of verification information include a characteristic key of each of the one or more users.

The second communicating unit is configured to transmit a second message, wherein the second message carries a verification requirement for a user using the terminal.

The second message carries a first parameter, wherein the first parameter is generated by the first network device.

The first parameter is pre-configured.

The second communicating unit is configured to receive the first parameter.

The characteristic key of each of the one or more users is stored in association with the identifier of the each of the one or more users and characteristic recovery information of the each of the one or more users.

The second communicating unit is configured to transmit a third message, wherein the third message carries identifier-related information of the first user, wherein the identifier-related information of the first user includes at least one of an identifier of the first user or a temporary identifier of the first user.

The third message is used for the terminal to determine an authentication result of the first user.

The first network device includes at least one of a UDM or a UDR.

FIG. 20 is a schematic block diagram of a second network device according to some embodiments of the present disclosure. The second network device includes the following units.

A third communicating unit 2001, configured to receive a first message from a terminal, wherein the first message carries one or more pieces of authentication information, wherein the one or more pieces of authentication information are used to authenticate a first user using the terminal, and different pieces of authentication information in the one or more pieces of authentication information are related to characteristic information of the first user and characteristic recovery information of different users; and transmit a fourth message to a first network device, wherein the fourth message carries a verification result, the verification result being related to the one or more pieces of authentication information.

The third communicating unit is configured to receive a fifth message from the first network device, wherein the fifth message carries one or more pieces of verification information; and transmit a second message to the terminal, wherein the second message carries a verification requirement for a user using the terminal.

The fifth message further carries identification information of one or more users capable of using the terminal and associated with the one or more pieces of verification information, different pieces of verification information are associated with identification information of different users, the one or more users include the first user, and the identification information of each of the one or more users includes at least one of an identifier of the each of the one or more users or a serial number of the each of the one or more users.

As illustrated in FIG. 20, the second network device further includes a third processing unit 2002, configured to perform one of: determining first verification information from the one or more pieces of verification information based on the one or more pieces of authentication information; or determining first verification information from the one or more pieces of verification information and identification information of a user associated with the first verification information based on the one or more pieces of authentication information.

The one or more pieces of authentication information include one or more characteristic authentication keys, and the one or more pieces of verification information include a characteristic key of each of the one or more users.

The third processing unit is configured to acquire one or more characteristic authentication keys by decrypting the one or more pieces of authentication information based on a first parameter; and determine the first verification information from the one or more pieces of verification information based on the one or more characteristic authentication keys, wherein the one or more pieces of verification information include a characteristic key of each of the one or more users.

The verification result includes at least one of the first verification information or the identification information of the user associated with the first verification information.

The fifth message further carries a first parameter, and the second message further carries the first parameter.

The third communicating unit is configured to receive a first parameter from the terminal; and transmit the first parameter to the first network device.

The third communicating unit is configured to receive a sixth message from the first network device, wherein the sixth message carries an identifier of the first user; and transmit a third message to the terminal, wherein the third message carries identifier-related information of the first user, wherein the identifier-related information of the first user includes at least one of: the identifier of the first user or a temporary identifier of the first user.

The sixth message further carries the temporary identifier of the first user.

The third processing unit is configured to assign the temporary identifier to the first user.

The third message is used for the terminal to determine an authentication result of the first user.

The first network device includes at least one of a UDM or a UDR; and the second network device includes at least one of a verification network element, an AMF, an AUSF, an HSS, or an ARPF.

Some embodiments of the present disclosure further provide a first network device. The first network device includes the following units.

A second communicating unit, configured to receive a fourth message from a second network device, wherein the fourth message carries a verification result, wherein the verification result is related to one or more pieces of authentication information, the one or more pieces of authentication information are used to authenticate a first user using a terminal, and different pieces of authentication information in the one or more pieces of authentication information are related to characteristic information of the first user and characteristic recovery information of different users.

The second communicating unit is configured to transmit a fifth message to the second network device, wherein the fifth message carries one or more pieces of verification information.

The one or more pieces of verification information are associated with identification information of one or more users capable of using the terminal, wherein the identification information of each of the one or more users includes at least one of an identifier of each user or a serial number of the each of the one or more users, and the one or more users include the first user.

The fifth message further carries identification information of one or more users capable of using the terminal and associated with the one or more pieces of verification information, different pieces of verification information are associated with identification information of different users, the one or more users include the first user, and the identification information of each of the one or more users includes at least one of: an identifier of the each of the one or more users or a serial number of the each of the one or more users.

The one or more pieces of verification information include a characteristic key of each of the one or more users.

The one or more pieces of verification information are acquired based on a first parameter and a characteristic key of each of the one or more users.

The verification result includes at least one of first verification information or identification information of a user associated with the first verification information, wherein the first verification information is one of the one or more pieces of verification information.

The first network device further includes a second processing unit configured to determine, based on the verification result, an identifier of the first user and successful authentication of the first user using the terminal.

The characteristic key of each of the one or more users is stored in association with an identifier of the each of the one or more users and the characteristic recovery information of the each of the one or more users.

The first parameter is pre-configured.

The fifth message further carries a first parameter, and the first parameter is generated by the first network device.

The second communicating unit is configured to receive the first parameter from the second network device.

The second communicating unit is configured to transmit a sixth message to the second network device, wherein the sixth message carries an identifier of the first user.

The second processing unit is configured to assign the temporary identifier to the first user.

The first network device includes at least one of: a UDM or a UDR; and the second network device includes at least one of: a verification network element, an AMF, an AUSF, an HSS, or an ARPF.

The devices according to the embodiments of the present disclosure may implement corresponding functions of the devices in the foregoing embodiments of the authentication method. For the procedures, functions, implementation modes, and beneficial effects corresponding to various modules (submodules, units, components, or the like) within the terminal device, the first network device, or the second network device, reference may be made to the corresponding descriptions in the above method embodiments, which are not repeated herein. It should be noted that the functions of various modules (submodules, units, components, or the like) within the terminal device, the first network device, or the second network device according to the embodiments of the present disclosure may be implemented by different modules (submodules, units, components, or the like) or by the same module (submodule, unit, component, or the like).

FIG. 21 is a schematic structural diagram of a communication device 2100 according to some embodiments of the present disclosure. The communication device 2100 includes a processor 2110. The processor 2110 calls and runs one or more computer programs from a memory to cause the communication device 2100 to perform the method according to the embodiments of the present disclosure. In some embodiments, the communication device 2100 further includes a memory 2120. The processor 2110 calls and runs one or more computer programs from the memory 2120 to cause the communication device 2100 to perform the method according to the embodiments of the present disclosure. The memory 2120 is a separate device independent from the processor 2110 or is integrated within the processor 2110. In some embodiments, the communication device 2100 further includes a transceiver 2130. The processor 2110 controls the transceiver 2130 to communicate with other devices to transmit information or data to other devices or to receive information or data from other devices. The transceiver 2130 includes a transmitter and a receiver. The transceiver 2130 further includes one or more antennas.

In some embodiments, the communication device 2100 is the terminal device, the first network device, or the second network device according to the embodiments of the present disclosure, and the communication device 2100 performs corresponding procedures performed by the terminal device, the first network device, or the second network device in various methods according to the embodiments of the present disclosure. For the sake of brevity, details will not be further elaborated herein.

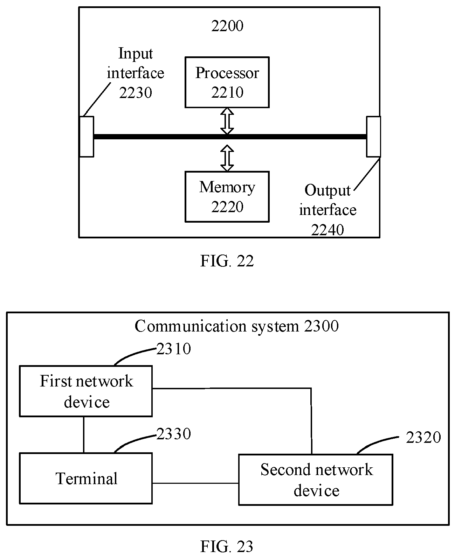

FIG. 22 is a schematic structural diagram of a chip 2200 according to some embodiments of the present disclosure. The chip 2200 includes a processor 2210. The processor 2210 calls and runs one or more computer programs from a memory to perform the method according to the embodiments of the present disclosure. In some embodiments, the chip 2200 further includes a memory 2220. The processor 2210 calls and runs one or more computer programs from the memory 2220 to perform the method applicable to the first device or the target second device in the embodiments of the present disclosure. The memory 2220 is a separate device independent from the processor 2010 or is integrated within the processor 2210. In some embodiments, the chip 2200 further includes an input interface 2230. The processor 2010 controls the input interface 2230 to communicate with other devices or chips to acquire information or data from other devices or chips. In some embodiments, the chip 2200 further includes an output interface 2240. The processor 2210 controls the output interface 2240 to communicate with other devices or chips to output information or data to other devices or chips.

In some embodiments, the chip is applicable to the terminal device, the first network device, or the second network device according to the embodiments of the present disclosure, and the chip implements corresponding procedures implemented by the terminal device, the first network device, or the second network device in various methods according to the embodiments of the present disclosure. For the sake of brevity, details will not be further elaborated herein. It is understandable that the chip in the embodiments of the present disclosure is also referred to as a system-level chip, a system chip, a chip system, a system-on-chip, or the like. The processor mentioned above is a general-purpose processor, a digital signal processor (DSP), a field-programmable gate array (FPGA), an application-specific integrated circuit (ASIC), or other programmable logic device, a transistor logic device, or a discrete hardware component. The general-purpose processor is a microprocessor, or any conventional processor, or the like. The memory mentioned above is a transitory memory or a non-transitory memory, or the memory includes both the transitory memory and the non-transitory memory. The non-transitory memory is a read-only memory (ROM), a programmable ROM (PROM), an erasable PROM (EPROM), an electrically EPROM (EEPROM), or a flash memory. The transitory memory is a random access memory (RAM). It is understandable that the memory described above is exemplary but not limited. For example, the memory according to the embodiments of the present disclosure is a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), or a direct rambus RAM (DR RAM). That is, the memory in the embodiments of the present disclosure is intended to include, but is not limited to, these and any other suitable types of memories.

FIG. 23 is a schematic block diagram of a communication system 2300 according to some embodiments of the present disclosure. The communication system 2300 includes a terminal 2330, a first network device 2310, and a second network device 2320. The terminal 2330 may be configured to perform a corresponding function performed by a terminal in the foregoing method. The first network device 2310 may be configured to perform a corresponding function performed by a first network device in the foregoing method. The second network device 2320 may be configured to perform a corresponding function performed by a second network device in the foregoing method. For brevity, details are not repeated any further.

The embodiments described above are implemented in whole or in part by software, hardware, firm ware or any combination thereof. In a case where the embodiments are implemented by software, the embodiments are implemented in the form of a computer program product in whole or in part. The computer program product includes one or more computer instructions. The one or more computer program instructions, when loaded and executed by a computer, wholly or partially generate the procedures or functions according to the embodiments of the disclosure. The computer is a general-purpose computer, a dedicated computer, a computer network, or other programmable device. The one or more computer instructions are stored in a computer-readable storage medium, or transmitted from one computer-readable storage medium to another computer-readable storage medium. For example, the one or more computer instructions are transmitted from a website site, a computer, a server or a data center in a wired (such as a coaxial cable, an optical fiber, a digital subscriber line (DSL)) or wireless (such as infrared, radio, or microwave) fashion to another website site, computer, server or data center. The computer-readable storage medium is any available medium that is accessible by a computer or a data storage device integrated with one or more available mediums, such as a server or a data center. The available medium is a magnetic medium (for example, a floppy disk, a hard disk, and a magnetic tape), an optical medium (for example, a DVD), or a semiconductor medium (for example, a solid state disk (SSD)).

It is understandable that, in various embodiments of the present disclosure, the serial number of each of the above processes does not imply the order of execution, and the order of execution of each of the processes should be determined by its function and inherent logic, without constituting any limitation of the implementation process of the embodiments of the present disclosure. Those skilled in the art may clearly understand that for the convenience and brevity of description, for the specific operating processes of the systems, apparatuses, and units described above, reference may be made to the corresponding processes in the method embodiments, which are not described any further. Described above are exemplary embodiments of the present disclosure, but the protection scope of the present disclosure is not limited to these exemplary embodiments. Various variations or substitutions readily conceivable by those skilled in the art within the technical scope disclosed in the present disclosure shall fall within the protection scope of the present disclosure. Therefore, the protection scope of the present disclosure shall be subject to the appended claims.

## Claims

1. An authentication method, performed by a terminal, the method comprising:
transmitting a first message, wherein the first message carries one or more pieces of authentication information, wherein the one or more pieces of authentication information are used to authenticate a first user using the terminal, and different pieces of authentication information in the one or more pieces of authentication information are related to characteristic information of the first user and characteristic recovery information of different users.

2. The method according to claim 1, wherein the one or more pieces of authentication information comprise one or more characteristic authentication keys, wherein the one or more characteristic authentication keys are acquired based on the characteristic information of the first user and characteristic recovery information of one or more users.

3. The method according to claim 1, wherein the one or more pieces of authentication information are acquired based on a first parameter and one or more characteristic authentication keys, wherein the one or more characteristic authentication keys are acquired based on the characteristic information of the first user and characteristic recovery information of one or more users.

4. The method according to claim 3, wherein the one or more pieces of authentication information are acquired by encrypting the one or more characteristic authentication keys based on the first parameter.

5. The method according to any one of claims 2 to 4, wherein the characteristic recovery information of each of the one or more users is pre-configured, the one or more users are users capable of using the terminal, and the one or more users comprise the first user.

6. The method according to any one of claims 1 to 5, wherein prior to transmitting the first message, the method further comprises:
receiving a second message, wherein the second message carries a verification requirement for a user using the terminal.

7. The method according to claim 6, wherein the second message further carries the first parameter.

8. The method according to claim 3 or 4, wherein the first parameter is generated by the terminal or is pre-configured.

9. The method according to claim 8, wherein in a case where the first parameter is generated by the terminal, the method further comprises:
transmitting the first parameter.

10. The method according to any one of claims 1 to 9, wherein upon transmitting the first message, the method further comprises:
receiving a third message, wherein the third message carries identifier-related information of the first user, wherein the identifier-related information of the first user comprises at least one of an identifier of the first user or a temporary identifier of the first user.

11. The method according to claim 10, wherein upon receiving the third message, the method further comprises:
storing the identifier-related information of the first user.

12. The method according to claim 11, wherein storing the identifier-related information of the first user comprises at least one of:
storing a correspondence between the identifier-related information of the first user and authentication information matching the first user; or
storing a correspondence between the identifier-related information of the first user and a characteristic authentication key matching the first user.

13. The method according to any one of claims 10 to 12, wherein the third message is used for the terminal to determine an authentication result of the first user.

14. An authentication method, performed by a first network device, the method comprising:
receiving a first message, wherein the first message carries one or more pieces of authentication information, wherein the one or more pieces of authentication information are used to authenticate a first user using a terminal, and different pieces of authentication information in the one or more pieces of authentication information are related to characteristic information of the first user and characteristic recovery information of different users.

15. The method according to claim 14, wherein upon receiving the first message, the method further comprises:
authenticating, based on the one or more pieces of authentication information and one or more pieces of verification information, the first user using the terminal, wherein the one or more pieces of verification information are associated with identification information of one or more users capable of using the terminal, different pieces of verification information are associated with identification information of different users, the identification information of each of the one or more users comprises at least one of an identifier of the each of the one or more users or a serial number of the each of the one or more users, and the one or more users comprise the first user.

16. The method according to claim 15, wherein the one or more pieces of authentication information comprise one or more characteristic authentication keys, and the one or more pieces of verification information comprise a characteristic key of each of the one or more users.

17. The method according to claim 15, wherein the one or more pieces of verification information are acquired based on a first parameter and a characteristic key of each of the one or more users.

18. The method according to claim 15, wherein authenticating, based on the one or more pieces of authentication information and the one or more pieces of verification information, the first user using the terminal comprises:
acquiring one or more characteristic authentication keys by decrypting the one or more pieces of authentication information based on a first parameter; and
authenticating the first user using the terminal based on the one or more characteristic authentication keys and the one or more pieces of verification information, wherein the one or more pieces of verification information comprise a characteristic key of each of the one or more users.

19. The method according to any one of claims 14 to 18, wherein prior to receiving the first message, the method further comprises:
transmitting a second message, wherein the second message carries a verification requirement for a user using the terminal.

20. The method according to claim 19, wherein the second message carries a first parameter, wherein the first parameter is generated by the first network device.

21. The method according to claim 17 or 18, wherein the first parameter is pre-configured.

22. The method according to claim 17 or 18, further comprising:
receiving the first parameter.

23. The method according to any one of claims 16 to 18, wherein the characteristic key of each of the one or more users is stored in association with the identifier of the each of the one or more users and characteristic recovery information of the each of the one or more users.

24. The method according to any one of claims 14 to 23, wherein upon receiving the first message, the method further comprises:
transmitting a third message, wherein the third message carries identifier-related information of the first user, wherein the identifier-related information of the first user comprises at least one of an identifier of the first user or a temporary identifier of the first user.

25. The method according to claim 24, wherein the third message is used for the terminal to determine an authentication result of the first user.

26. The method according to any one of claims 14 to 25, wherein the first network device comprises at least one of a unified data management function (UDM) or a unified data repository (UDR).

27. An authentication method, performed by a second network device, the method comprising:
receiving a first message from a terminal, wherein the first message carries one or more pieces of authentication information, wherein the one or more pieces of authentication information are used to authenticate a first user using the terminal, and different pieces of authentication information in the one or more pieces of authentication information are related to characteristic information of the first user and characteristic recovery information of different users; and
transmitting a fourth message to a first network device, wherein the fourth message carries a verification result, the verification result being related to the one or more pieces of authentication information.

28. The method according to claim 27, wherein prior to receiving the first message from the terminal, the method further comprises:
receiving a fifth message from the first network device, wherein the fifth message carries one or more pieces of verification information; and
transmitting a second message to the terminal, wherein the second message carries a verification requirement for a user using the terminal.

29. The method according to claim 28, wherein the fifth message further carries identification information of one or more users capable of using the terminal and associated with the one or more pieces of verification information, different pieces of verification information are associated with identification information of different users, the one or more users comprise the first user, and the identification information of each of the one or more users comprises at least one of an identifier of the each of the one or more users or a serial number of the each of the one or more users.

30. The method according to claim 28 or 29, wherein prior to transmitting the fourth message to the first network device, the method further comprises one of:
determining first verification information from the one or more pieces of verification information based on the one or more pieces of authentication information; or
determining first verification information from the one or more pieces of verification information and identification information of a user associated with the first verification information based on the one or more pieces of authentication information.

31. The method according to claim 30, wherein the one or more pieces of authentication information comprise one or more characteristic authentication keys, and the one or more pieces of verification information comprise a characteristic key of each of the one or more users.

32. The method according to claim 30, wherein determining the first verification information from the one or more pieces of verification information based on the one or more pieces of authentication information comprises:
acquiring one or more characteristic authentication keys by decrypting the one or more pieces of authentication information based on a first parameter; and
determining the first verification information from the one or more pieces of verification information based on the one or more characteristic authentication keys, wherein the one or more pieces of verification information comprise a characteristic key of each of the one or more users.

33. The method according to any one of claims 30 to 32, wherein the verification result comprises at least one of the first verification information or the identification information of the user associated with the first verification information.

34. The method according to any one of claims 28 to 33, wherein the fifth message further carries a first parameter, and the second message further carries the first parameter.

35. The method according to any one of claims 28 to 33, wherein prior to receiving the fifth message from the first network device, the method further comprises:
receiving a first parameter from the terminal; and
transmitting the first parameter to the first network device.

36. The method according to any one of claims 27 to 35, wherein upon transmitting the fourth message to the first network device, the method further comprises:
receiving a sixth message from the first network device, wherein the sixth message carries an identifier of the first user; and
transmitting a third message to the terminal, wherein the third message carries identifier-related information of the first user, wherein the identifier-related information of the first user comprises at least one of the identifier of the first user or a temporary identifier of the first user.

37. The method according to claim 36, wherein the sixth message further carries the temporary identifier of the first user.

38. The method according to claim 36, wherein prior to transmitting the third message to the terminal, the method further comprises:
assigning the temporary identifier to the first user.

39. The method according to any one of claims 36 to 38, wherein the third message is used for the terminal to determine an authentication result of the first user.

40. The method according to any one of claims 27 to 39, wherein
the first network device comprises at least one of a unified data management function (UDM) or a unified data repository (UDR); and
the second network device comprises at least one of a verification network element, an access and mobility management function (AMF), an authentication server function (AUSF), a home subscriber server (HSS), or an authentication credential repository and processing function (ARPF).

41. An authentication method, performed by a first network device, the method comprising:
receiving a fourth message from a second network device, wherein the fourth message carries a verification result, the verification result being related to one or more pieces of authentication information, wherein the one or more pieces of authentication information are used to authenticate a first user using a terminal, and different pieces of authentication information in the one or more pieces of authentication information are related to characteristic information of the first user and characteristic recovery information of different users.

42. The method according to claim 41, wherein prior to receiving the fourth message from the second network device, the method further comprises:
transmitting a fifth message to the second network device, wherein the fifth message carries one or more pieces of verification information.

43. The method according to claim 42, wherein the one or more pieces of verification information are associated with identification information of one or more users capable of using the terminal, wherein the identification information of each of the one or more users comprises at least one of an identifier of the each of the one or more users or a serial number of the each of the one or more users, and the one or more users comprise the first user.

44. The method according to claim 42, wherein the fifth message further carries identification information of one or more users capable of using the terminal and associated with the one or more pieces of verification information, different pieces of verification information are associated with identification information of different users, the one or more users comprise the first user, and the identification information of each of the one or more users comprises at least one of an identifier of the each of the one or more users or a serial number of the each of the one or more users.

45. The method according to any one of claims 42 to 44, wherein the one or more pieces of verification information comprise a characteristic key of each of the one or more users.

46. The method according to any one of claims 42 to 44, wherein the one or more pieces of verification information are acquired based on a first parameter and a characteristic key of each of the one or more users.

47. The method according to any one of claims 43 to 46, wherein the verification result comprises at least one of first verification information or identification information of a user associated with first verification information, wherein the first verification information is one of the one or more pieces of verification information.

48. The method according to claim 47, wherein upon receiving the fourth message from the second network device, the method further comprises:
determining, based on the verification result, an identifier of the first user and successful authentication of the first user using the terminal.

49. The method according to claim 45 or 46, wherein the characteristic key of each of the one or more users is stored in association with an identifier of the each of the one or more users and characteristic recovery information of the each of the one or more users.

50. The method according to claim 46, wherein the first parameter is pre-configured.

51. The method according to any one of claims 42 to 49, wherein the fifth message further carries a first parameter, and the first parameter is generated by the first network device.

52. The method according to any one of claims 42 to 49, wherein prior to transmitting the fifth message to the second network device, the method further comprises:
receiving a first parameter from the second network device.

53. The method according to any one of claims 41 to 52, wherein upon receiving the fourth message from the second network device, the method further comprises:
transmitting a sixth message to the second network device, wherein the sixth message carries an identifier of the first user.

54. The method according to claim 53, wherein the sixth message further carries a temporary identifier of the first user, and the method further comprises:
assigning the temporary identifier to the first user.

55. The method according to any one of claims 41 to 54, wherein
the first network device comprises at least one of a unified data management function (UDM) or a unified data repository (UDR); and
the second network device comprises at least one of a verification network element, an access and mobility management function (AMF), an authentication server function (AUSF), a home subscriber server (HSS), or an authentication credential repository and processing function (ARPF).

56. A terminal, comprising:
a first communicating unit, configured to transmit a first message, wherein the first message carries one or more pieces of authentication information, wherein the one or more pieces of authentication information are used to authenticate a first user using the terminal, and different pieces of authentication information in the one or more pieces of authentication information are related to characteristic information of the first user and characteristic recovery information of different users.

57. The terminal according to claim 56, wherein the one or more pieces of authentication information comprise one or more characteristic authentication keys, wherein the one or more characteristic authentication keys are acquired based on the characteristic information of the first user and characteristic recovery information of one or more users.

58. The terminal according to claim 56, wherein the one or more pieces of authentication information are acquired based on a first parameter and one or more characteristic authentication keys, wherein the one or more characteristic authentication keys are acquired based on the characteristic information of the first user and characteristic recovery information of one or more users.

59. The terminal according to claim 58, wherein the one or more pieces of authentication information are acquired by encrypting the one or more characteristic authentication keys based on the first parameter.

60. The terminal according to any one of claims 57 to 59, wherein the characteristic recovery information of each of the one or more users is pre-configured, the one or more users are users capable of using the terminal, and the one or more users comprise the first user.

61. The terminal according to any one of claims 56 to 60, wherein the first communicating unit is configured to receive a second message, wherein the second message carries a verification requirement for a user using the terminal.

62. The terminal according to claim 61, wherein the second message further carries a first parameter.

63. The terminal according to claim 58 or 59, wherein the first parameter is generated by the terminal or is pre-configured.

64. The terminal according to claim 63, wherein in a case where the first parameter is generated by the terminal, the first communicating unit is configured to transmit the first parameter.

65. The terminal according to any one of claims 56 to 64, wherein the first communicating unit is configured to receive a third message, wherein the third message carries identifier-related information of the first user, wherein the identifier-related information of the first user comprises at least one of an identifier of the first user or a temporary identifier of the first user.

66. The terminal according to claim 65, wherein the terminal further comprises a first processing unit configured to store the identifier-related information of the first user.

67. The terminal according to claim 66, wherein the first processing unit is configured to perform at least one of: storing a correspondence between the identifier-related information of the first user and authentication information matching the first user; or storing a correspondence between the identifier-related information of the first user and a characteristic authentication key matching the first user.

68. The terminal according to any one of claims 65 to 67, wherein the third message is used for the terminal to determine an authentication result of the first user.

69. A first network device, comprising:
a second communicating unit, configured to receive a first message, wherein the first message carries one or more pieces of authentication information, wherein the one or more pieces of authentication information are used to authenticate a first user using a terminal, and different pieces of authentication information in the one or more pieces of authentication information are related to characteristic information of the first user and characteristic recovery information of different users.

70. The first network device according to claim 69, wherein the first network device further comprises a second processing unit configured to authenticate, based on the one or more pieces of authentication information and one or more pieces of verification information, the first user using the terminal, wherein the one or more pieces of verification information are associated with identification information of one or more users capable of using the terminal, different pieces of verification information are associated with identification information of different users, the identification information of each of the one or more users comprises at least one of an identifier of the each of the one or more users or a serial number of the each of the one or more users, and the one or more users comprise the first user.

71. The first network device according to claim 70, wherein the one or more pieces of authentication information comprise one or more characteristic authentication keys, and the one or more pieces of verification information comprise a characteristic key of each of the one or more users.

72. The first network device according to claim 70, wherein the one or more pieces of verification information are acquired based on a first parameter and a characteristic key of each of the one or more users.

73. The first network device according to claim 70, wherein the second processing unit is configured to acquire one or more characteristic authentication keys by decrypting the one or more pieces of authentication information based on a first parameter; and authenticate the first user using the terminal based on the one or more characteristic authentication keys and the one or more pieces of verification information, wherein the one or more pieces of verification information comprise a characteristic key of each of the one or more users.

74. The first network device according to any one of claims 69 to 73, wherein the second communicating unit is configured to transmit a second message, wherein the second message carries a verification requirement for a user using the terminal.

75. The first network device according to claim 74, wherein the second message carries a first parameter, wherein the first parameter is generated by the first network device.

76. The first network device according to claim 72 or 73, wherein the first parameter is pre-configured.

77. The first network device according to claim 72 or 73, wherein the second communicating unit is configured to receive the first parameter.

78. The first network device according to any one of claims 71 to 73, wherein the characteristic key of each of the one or more users is stored in association with the identifier of the each of the one or more users and characteristic recovery information of the each of the one or more users.

79. The first network device according to any one of claims 69 to 78, wherein the second communicating unit is configured to transmit a third message, wherein the third message carries identifier-related information of the first user, wherein the identifier-related information of the first user comprises at least one of an identifier of the first user or a temporary identifier of the first user.

80. The first network device according to claim 79, wherein the third message is used for the terminal to determine an authentication result of the first user.

81. The first network device according to any one of claims 69 to 80, wherein the first network device comprises at least one of a unified data management function (UDM) or a unified data repository (UDR).

82. A second network device, comprising:
a third communicating unit configured to receive a first message from a terminal, wherein the first message carries one or more pieces of authentication information, wherein the one or more pieces of authentication information are used to authenticate a first user using the terminal, and different pieces of authentication information in the one or more pieces of authentication information are related to characteristic information of the first user and characteristic recovery information of different users; and transmit a fourth message to a first network device, wherein the fourth message carries a verification result, the verification result being related to the one or more pieces of authentication information.

83. The second network device according to claim 82, wherein the third communicating unit is configured to receive a fifth message from the first network device, wherein the fifth message carries one or more pieces of verification information; and transmit a second message to the terminal, wherein the second message carries a verification requirement for a user using the terminal.

84. The second network device according to claim 83, wherein the fifth message further carries identification information of one or more users capable of using the terminal and associated with the one or more pieces of verification information, different pieces of verification information are associated with identification information of different users, the one or more users comprise the first user, and the identification information of each of the one or more users comprises at least one of an identifier of the each of the one or more users or a serial number of the each of the one or more users.

85. The second network device according to claim 83 or 84, wherein the second network device further comprises a third processing unit configured to perform one of: determining first verification information from the one or more pieces of verification information based on the one or more pieces of authentication information; or determining first verification information from the one or more pieces of verification information and identification information of a user associated with the first verification information based on the one or more pieces of authentication information.

86. The second network device according to claim 85, wherein the one or more pieces of authentication information comprise one or more characteristic authentication keys, and the one or more pieces of verification information comprise a characteristic key of each of the one or more users.

87. The second network device according to claim 85, wherein the third processing unit is configured to acquire one or more characteristic authentication keys by decrypting the one or more pieces of authentication information based on a first parameter; and determine the first verification information from the one or more pieces of verification information based on the one or more characteristic authentication keys, wherein the one or more pieces of verification information comprise a characteristic key of each of the one or more users.

88. The second network device according to any one of claims 85 to 87, wherein the verification result comprises at least one of the first verification information or the identification information of the user associated with the first verification information.

89. The second network device according to any one of claims 83 to 88, wherein the fifth message further carries a first parameter, and the second message further carries the first parameter.

90. The second network device according to any one of claims 83 to 88, wherein the third communicating unit is configured to receive a first parameter from the terminal; and transmit the first parameter to the first network device.

91. The second network device according to any one of claims 82 to 90, wherein the third communicating unit is configured to receive a sixth message from the first network device, wherein the sixth message carries an identifier of the first user; and transmit a third message to the terminal, wherein the third message carries identifier-related information of the first user, wherein the identifier-related information of the first user comprises at least one of: the identifier of the first user or a temporary identifier of the first user.

92. The second network device according to claim 91, wherein the sixth message further carries the temporary identifier of the first user.

93. The second network device according to claim 91, wherein the third processing unit is configured to assign the temporary identifier to the first user.

94. The second network device according to any one of claims 91 to 93, wherein the third message is used for the terminal to determine an authentication result of the first user.

95. The second network device according to any one of claims 82 to 94, wherein
the first network device comprises at least one of a unified data management function (UDM) or a unified data repository (UDR); and
the second network device comprises at least one of a verification network element, an access and mobility management function (AMF), an authentication server function (AUSF), a home subscriber server (HSS), or an authentication credential repository and processing function (ARPF).

96. A first network device, comprising:
a second communicating unit, configured to receive a fourth message from a second network device, wherein the fourth message carries a verification result, the verification result being related to one or more pieces of authentication information, wherein the one or more pieces of authentication information are used to authenticate a first user using a terminal, and different pieces of authentication information in the one or more pieces of authentication information are related to characteristic information of the first user and characteristic recovery information of different users.

97. The first network device according to claim 96, wherein the second communicating unit is configured to transmit a fifth message to the second network device, wherein the fifth message carries one or more pieces of verification information.

98. The first network device according to claim 97, wherein the one or more pieces of verification information are associated with identification information of one or more users capable of using the terminal, wherein the identification information of each of the one or more users comprises at least one of an identifier of each user or a serial number of the each of the one or more users, and the one or more users comprise the first user.

99. The first network device according to claim 97, wherein the fifth message further carries identification information of one or more users capable of using the terminal and associated with the one or more pieces of verification information, different pieces of verification information are associated with identification information of different users, the one or more users comprise the first user, and the identification information of each of the one or more users comprises at least one of: an identifier of the each of the one or more users or a serial number of the each of the one or more users.

100. The first network device according to any one of claims 97 to 99, wherein the one or more pieces of verification information comprise a characteristic key of each of the one or more users.

101. The first network device according to any one of claims 97 to 99, wherein the one or more pieces of verification information are acquired based on a first parameter and a characteristic key of each of the one or more users.

102. The first network device according to any one of claims 98 to 101, wherein the verification result comprises at least one of first verification information or identification information of a user associated with the first verification information, wherein the first verification information is one of the one or more pieces of verification information.

103. The first network device according to claim 102, wherein the first network device further comprises a second processing unit configured to determine, based on the verification result, an identifier of the first user and successful authentication of the first user using the terminal.

104. The first network device according to claim 100 or 101, wherein the characteristic key of each of the one or more users is stored in association with an identifier of the each of the one or more users and the characteristic recovery information of the each of the one or more users.

105. The first network device according to claim 101, wherein the first parameter is pre-configured.

106. The first network device according to any one of claims 97 to 104, wherein the fifth message further carries a first parameter, and the first parameter is generated by the first network device.

107. The first network device according to any one of claims 97 to 104, wherein the second communicating unit is configured to receive the first parameter from the second network device.

108. The first network device according to any one of claims 96 to 107, wherein the second communicating unit is configured to transmit a sixth message to the second network device, wherein the sixth message carries an identifier of the first user.

109. The first network device according to claim 108, wherein the second processing unit is configured to assign the temporary identifier to the first user.

110. The first network device according to any one of claims 96 to 109, wherein
the first network device comprises at least one of: a unified data management function (UDM) or a unified data repository (UDR); and
the second network device comprises at least one of: a verification network element, an access and mobility management function (AMF), an authentication server function (AUSF), a home subscriber server (HSS), or an authentication credential repository and processing function (ARPF).

111. A terminal, comprising: a transceiver, a processor, and a memory, wherein the memory is configured to store one or more computer programs, the transceiver is configured to communicate with other devices, and the processor is configured to call and run the one or more computer programs stored in the memory to cause the terminal to perform the method as defined in any one of claims 1 to 13.

112. A first network device, comprising: a transceiver, a processor, and a memory, wherein the memory is configured to store one or more computer programs, the transceiver is configured to communicate with other devices, and the processor is configured to call and run the one or more computer programs stored in the memory to cause the first network device to perform the method as defined in any one of claims 16 to 26 or claims 41 to 55.

113. A second network device, comprising: a transceiver, a processor, and a memory, wherein the memory is configured to store one or more computer programs, the transceiver is configured to communicate with other devices, and the processor is configured to call and run the one or more computer programs stored in the memory to cause the second network device to perform the method as defined in any one of claims 27 to 40.

114. A chip, comprising: a processor configured to call and run one or more computer programs from a memory to cause a device equipped with the chip to perform the method as defined in any one of claims 1 to 13, or claims 14 to 26, or claims 27 to 40, or claims 41 to 55.

115. A computer-readable storage medium, configured to store one or more computer programs, wherein the one or more computer programs, when called and run by a device, cause the device to perform the method as defined in any one of claims 1 to 13, or claims 14 to 26, or claims 27 to 40, or claims 41 to 55.

116. A computer program product, comprising: one or more computer program instructions, wherein the one or more computer program instructions, when loaded and executed by a computer, cause the computer to perform the method as defined in any one of claims 1 to 13, or claims 14 to 26, or claims 27 to 40, or claims 41 to 55.

117. A computer program, wherein the computer program, when loaded and run on a computer, causes the computer to perform the method as defined in any one of claims 1 to 13, or claims 14 to 26, or claims 27 to 40, or claims 41 to 55.
